# EUROPEAN PATENT SPECIFICATION

(11) **EP 3 401 069 B1**
(45) Date of publication and mention of the grant of the patent: **20.10.2021**
(21) Application number: 16882960.4
(22) Date of filing: 08.01.2016
(51) Int. Cl.: B28D 1/08, B23D 61/18, B23D 57/00

(54) **WIRE SAWING MACHINE**
DRAHTSÄGEMASCHINE
MACHINE DE SCIAGE À FIL HÉLICOÏDAL

(43) Date of publication of application: 14.11.2018
(73) Proprietor: Chen, Liwen, Shenzhen, Guangdong 518000 (CN)
(72) Inventor: Chen, Liwen, Shenzhen, Guangdong 518000 (CN)
(74) Representative: Manitz Finsterwald Patent- und Rechtsanwaltspartnerschaft mbB
(86) International application number: PCT/CN2016/070519
(87) International publication number: WO 2017/117815

(56) References cited:
- EP-A1- 2 535 144
- WO-A2-2009/154431
- CN-U- 203 712 885
- CN-U- 203 712 885
- CN-U- 204 054 363
- CN-U- 204 414 316
- CN-U- 205 466 772
- DE-U1-202005 006 442
- DE-U1-202005 006 442
- JP-A- H02 124 259
- JP-A- 2001 219 355
- JP-B2- 3 105 431
- KR-A- 20120 118 993
- KR-B1- 100 501 213
- TW-A- 201 410 423

## Description

### CROSS-REFERENCES TO RELATED APPLICATIONS

This application is a national stage application of PCT Patent Application No. PCT/CN2016/070519, filed on 08.01.2016.

### FIELD OF THE INVENTION

The present invention relates to the field of cutting equipment technology, and more particularly, to a wire sawing machine. The features of the preamble of the independent claim are known from CN 203 712 885 U.

### BACKGROUND

Document EP 2 535 144 A1 discloses a wire saw for cutting wafers with web wire supporting rollers and a movable cutting load release component and a load release mechanism based on a pivoting arm supporting a pulley.

In the prior art, for a plurality of cutting equipment, including a wire sawing machine, there is at least one problem existing as follows: during a cutting process, when a piece of concrete of a building is in cut, a cut part may sink down due to a weight thereof, for example, when a common concrete support beam is being cut or removed, a concrete been cut may sink and form a falling object, generating a pretty large gravity thereof, in tons or even tens of tons, thus, according to that, the falling object is able to drive a diamond beaded rope together with the machine sink for a few centimeters or over a dozen centimeters, and this may cause the diamond beaded rope to be broken, followed by a plurality of injuries or damages, or this may cause the machine damaged with a plurality of frequent failures, and greatly reduce a service life of the machine.

And, to such a problem mentioned above, in the prior art, a common solution is achieved by making a part of the machine broken automatically, to preserve a main part of the machine and avoid the diamond beaded rope from being broken. For example, by making a chain of a rotating device broken automatically, a rotating gear broken, or a protective pin broken, in order to preserve the main part of the machine, and avoid the diamond beaded rope from being broken. However, such a solution may affect a working period, reduce a working efficiency, and increase a manufacturing cost, due to it is needed to replace the part broken.

Therefore, the current technology needs to be improved and developed.

### BRIEF SUMMARY OF THE DISCLOSURE

According to the above described defects, the purpose of the present invention is to provide a wire sawing machine, in order to solve a plurality of problems in the prior art that, due to the wire sawing machine having a plurality of parts broken, to preserve a main part of the machine and a diamond-bead wire secure, when a sawing object falls off, and that causes a plurality of problems to the wire sawing machine including a discontinuous working period, a trouble-some and time-costing maintenance, a low working efficiency, and a high manufacturing cost. In order to achieve the above mentioned goals, the technical solution of the present invention to solve the technical problems is defined as follows:
The present invention is defined by a wire sawing machine comprising:
an installation base,
a drive component, the drive component comprises at least one driving pulley and a first driving source applied to driving the at least one driving pulley to rotate and work, the at least one driving pulley are rotatably mounted on the installation base, the first driving source is mounted on the installation base, and connected to the at least one driving pulley;
a movable cutting load release component, the movable cutting load release component comprises a movable supporting frame being able to slide up and down above the installation base, an elevation mechanism applied to making the movable supporting frame slide up and down, a diamond-bead wire applied to cutting and processing the sawing object, at least one moving pulley applied to approaching the sawing object and guiding the diamond-bead wire cutting and processing the sawing object, and a load release mechanism applied to executing a load release operation to an abnormally excessive load acting on the diamond-bead wire due to a plurality of abnormal reasons; the movable supporting frame comprises a rotating arm and a first supporting arm, the rotating arm comprises a first end and a second end arranged opposite to the first end, the first end of the rotating arm is mounted rotatably on the first supporting arm, and between the rotating arm and the first supporting arm, there is an initial region arranged, which provides the rotating arm to be stationary with respect to the first supporting arm, and a rotation region arranged, which provides the rotating arm to be rotatable with respect to the first supporting arm; the elevation mechanism is mounted on the installation base, and connected to the movable supporting frame; one of the at least one moving pulley is mounted rotatably on the second end of the rotating arm; the diamond-bead wire is wound on the at least one driving pulley and the at least one moving pulley respectively; the load release mechanism comprises a load release recovery component applied to releasing the abnormally excessive load acting on the moving pulley mounted on the rotating arm and transmitted from the diamond-bead wire, while driving the rotating arm return to the initial region from the rotation region, one end of the load release recovery component connects to the movable supporting frame, another end of the load release recovery component connects to the rotating arm; and
a wire retracting component, the wire retracting component comprises at least one wire retracting pulley, and a wire retracting rack applied to mounting the at least one wire retracting pulley, the wire retracting rack is mounted on the installation base, the at least one wire retracting pulley is mounted rotatably on the wire retracting rack, and the at least one wire retracting pulley is wound by the diamond-bead wire output from the at least one moving pulley.

A technical effect of the wire sawing machine disclosed by the present invention is: when the diamond-bead wire in the wire sawing machine cuts a sawing object specified, if a part being cut appears to be falling, an action force generated by the part being cut during falling will be transferred directly to the moving pulley through the diamond-bead wire; the moving pulley will transfer the force to the rotating arm after being stressed; the rotating arm will drive the load release recovery component rotate to the rotation region from the initial region after being stressed, and rotate to a corresponding position in the rotation region according to a size of the action force applied hereto, so as to prevent the diamond-bead wire wound on the moving pulley from being crushed by the falling object, attenuate and release the action force that the rotating arm is stressed by the load release recovery component; when the action force on the rotating arm is attenuated to a certain extent, if a force value of the action force is less than that of a restoring force of the load release recovery component, the load release recovery component will drive the rotating arm return slowly to the initial region from the rotation region, according to an attenuation of the action force on the rotating arm.

Additionally, when the diamond-bead wire in the wire sawing machine cuts a sawing object specified, if a certain part of the sawing object makes a cutting resistance acted on the diamond-bead wire increase in a sudden, due to a plurality of factors including a difference in a dense or a material, the diamond-bead wire will transfer the action force stressed thereof to the moving pulley; then the moving pulley will transfer the action force to the rotating arm ;after being stressed, the rotating arm will drive the load release recovery component rotate to the rotation region from the initial region, and rotate to a corresponding position in the rotation region according to a size of the action force applied hereto, so as to prevent the diamond-bead wire from being damaged by the resistance increased in a sudden, attenuate and release the action force that the rotating arm is stressed, by the load release recovery component; when the action force on the rotating arm is attenuated to a certain extent, if the force value of the action force is less than that of the restoring force of the load release recovery component, the load release recovery component will drive the rotating arm return slowly to the initial region from the rotation region, according to an attenuation of the action force on the rotating arm.

All above, the wire sawing machine has a plurality of advantages listed below:
1. when the diamond-bead wire cuts into a harder material or gets stuck during cutting, a load release recovery action of the load release recovery component may be applied to buffering the diamond-bead wire, thus decreasing a possibility of damages; at a same time, due to a great decrease on the possibility of damage of the diamond-bead wire, an accident of damage and injury caused by splashing of the diamond-bead wire damaged is also greatly reduced, which facilitates to ensure a safety of an operator;
2. due to a relaxation role of the load release recovery component during cutting, the diamond-bead wire has a relatively uniform force during cutting, and accordingly, a consumption of both wear and tear of the diamond-bead wire will decrease greatly, which facilitates to extend a service life of the diamond-bead wire, decrease a cost and improve a cutting efficiency; while being able to decrease a cost of an energy consumption, labor and machine use; moreover, comparing to the prior arts, it decreases a limit of requiring an experienced technician to operate the wire sawing machine, thus it further lowers a manufacturing cost;
3. by arranging and using the movable cutting load release component, it is possible to make a buffer action to a circuit, an oil route, a mechanical transmission system of the machine as a whole, thus, to the machine as a whole, it is possible to reduce a maintenance rate, a failure rate, and a maintenance cost of the machine greatly; while it is possible to guarantee and extend a continuous working period of the wire sawing machine, and make the efficiency and a productivity of the machine improve greatly during the working period, thereby reducing a labor cost and improving the production efficiency greatly;
4. comparing to the prior arts that adopting a method of protecting the machine in a whole and the diamond-bead wire by damaging some parts, in a case of the part being cut from the concrete of the building is dropping, a setting of the movable cutting load release component described in the present application, may facilitate to guarantee not only no damage to any parts, but also the working period to be continuous, thus it is possible to improve a working efficiency and reduce a manufacturing cost;
5. due to a setting of the movable cutting load release component, it is able to greatly reduce a limitation of a load carried by the machine in a whole, thus, it is possible to reduce a use of a plurality of manufacturing materials, lower a whole weight of the machine, making the machine lighter and more convenient for a transportation and an assembly, while the manufacturing cost is lower and a price is more affordable;
6. through a setting of a fixation mechanism, it is possible to fix the rotating arm to any one position between the initial region and the rotation region, thus making the rotating arm from being arranged rotatably on the first supporting arm and being able to be adjusted freely, to arranged fixedly on the first supporting arm. Therefore, in a case of taking an processing efficiency of the cutting equipment as a first priority, it is possible to fixing the rotating arm in the initial region by the fixation mechanism, and a cutting device will also be fixed following a fixation of the rotating arm, that makes the cutting device locating in the initial region have a best cutting efficiency, and it is possible to adjust the cutting equipment in a whole to be one having a high processing efficiency;
7. by a setting of the vibration damping pad in the fixation mechanism, it is possible to set a different hardness, according to an actual requirement. If in a case, it is needed for the vibration damping pad to totally resist both of the rotating arm and the first supporting arm, so as to fix the rotating arm in the initial region, it is possible to select a vibration damping pad with a Shore hardness of 70-100 HA, and most of the cases like this are taking the processing efficiency of a cutting equipment as a first priority; if it is needed that the vibration damping pad makes an action of buffering and damping to the rotating arm, it is possible to select a vibration damping pad with a Shore hardness of 30-60 HA. Also, it may be seen that, the setting of the vibration damping pad may be flexibly set according to an actual situation and a customer need.

### BRIEF DESCRIPTION OF THE DRAWINGS

Figure 1 illustrates a perspective view of a wire sawing machine described in the present invention;
Figure 2 illustrates a front view of the wire sawing machine in Fig.1;
Figure 3 illustrates a rear view of the wire sawing machine in Fig.1;
Figure 4 illustrates a schematic diagram on a part of a movable cutting load release component in the wire sawing machine described in the present invention;
Figure 5 illustrates a schematic diagram on another embodiment of the wire sawing machine described in the present invention;
Figure 6 illustrates a schematic diagram on the wire sawing machine described in the present invention when the rotating arm thereof is turned to the rotating area;
Figure 7 illustrates a schematic diagram on another embodiment of the wire sawing machine described in the present invention;
Figure 8 illustrates a schematic diagram on another embodiment of the wire sawing machine described in the present invention;
Figure 9 illustrates a schematic diagram on another embodiment of the wire sawing machine described in the present invention;
Figure 10 illustrates a schematic diagram in another angle on the wire sawing machine in Fig. 9;
Figure 11 illustrates a schematic diagram on another embodiment of the wire sawing machine described in the present invention;
Figure 12 illustrates a schematic diagram in another angle on the wire sawing machine in Fig. 11;
Figure 13 illustrates a schematic diagram on another embodiment of the wire sawing machine described in the present invention;
Figure 14 illustrates a schematic diagram on another embodiment of the wire sawing machine described in the present invention;

### DETAILED DESCRIPTION OF EMBODIMENTS

In order to make the purpose, technical solution and the advantages of the present invention clearer and more explicit, further detailed descriptions of the present invention are stated hereafter, referencing to the attached drawings and some preferred embodiments of the present invention. It should be understood that the detailed embodiments of the invention described here are used to explain the present invention as defined by the claims, without limiting it to the embodiments presented.

### Embodiment I:

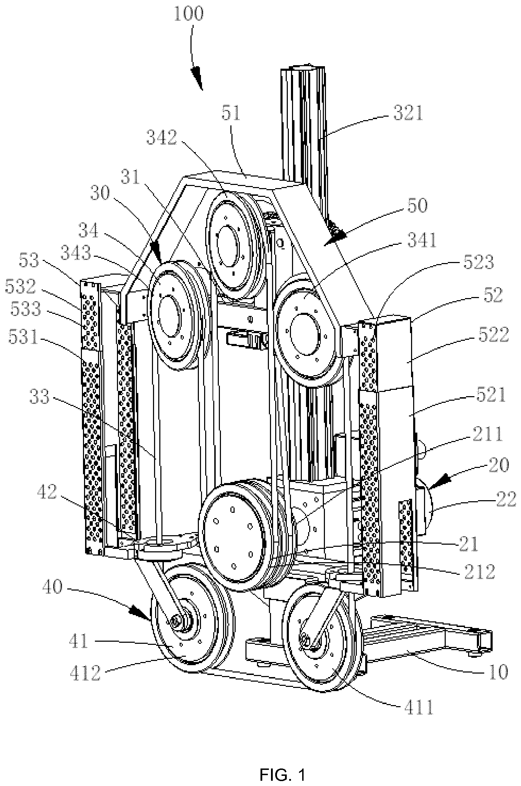

Referencing to FIGs. 1-4, detailed descriptions on a first embodiment of a wire saw machine described in the present application are stated below.

The wire saw machine 100 described in the present embodiment, wherein a sawing object that the wire saw machine 100 works on is mainly a building concrete, a marble block and more; while the wire saw machine 100 comprises an installation base 10, a drive component 20, a movable cutting load release component 30 and a wire retracting component 40. More details on each part of the wire saw machine 100 are further described below:
the drive component 20 comprises at least one driving pulley 21 and a first driving source 22 applied to driving the at least one driving pulley 21 rotate and work, the at least one driving pulley 21 are rotatably mounted on the installation base 10, the first driving source 22 is mounted on the installation base 10, and connected to the at least one driving pulley 21;
the movable cutting load release component 30 comprises a movable supporting frame 31 being able to slide up and down above the installing base 10, an elevation mechanism 32 applied to making the movable supporting frame 31 slide up and down, a diamond-bead wire 33 applied to cutting and processing the sawing object, at least one moving pulley 34 applied to approaching the sawing object and guiding the diamond-bead wire 33 cutting and processing the sawing object, and a load release mechanism 35 applied to executing a load release operation to an abnormally excessive load acting on the diamond-bead wire 33 due to a plurality of abnormal reasons; wherein the movable supporting frame 31 comprises a rotating arm 310 and a first supporting arm 311, the rotating arm 310 comprises a first end 3101 and a second end 3102 arranged opposite to the first end 3101, the first end 3101 of the rotating arm 310 is mounted rotatably on the first supporting arm 311, and between the rotating arm 310 and the first supporting arm 311, there is an initial region C arranged, which provides the rotating arm 310 to be stationary with respect to the first supporting arm 311, and a rotation region D arranged, which provides the rotating arm 310 to be rotatable with respect to the first supporting arm 311; the elevation mechanism 32 is mounted on the installation base 10, and connected to the movable supporting frame 31; one of the at least one moving pulley 34 is mounted rotatably on the second end 3102 of the rotating arm 310; the diamond-bead wire 33 is wound on the at least one driving pulley 21 and the at least one moving pulley 34 respectively; the load release mechanism 35 comprises a load release recovery component 351 applied to releasing the abnormally excessive load acting on the moving pulley 34 mounted on the rotating arm 310 and transmitted from the diamond-bead wire 33, while driving the rotating arm 310 return to the initial region C from the rotation region D, one end of the load release recovery component 351 connects to the movable supporting frame 31, another end of the load release recovery component 351 connects to the rotating arm 310;
the wire retracting component 40 comprises at least one wire retracting pulley 41, and a wire retracting rack 42 applied to mounting the at least one wire retracting pulley 41, the wire retracting rack 42 is mounted on the installation base 10, the at least one wire retracting pulley 41 is mounted rotatably on the wire retracting rack 42, and the at least one wire retracting pulley 41 is wound by the diamond-bead wire 33 output from the at least one moving pulley 34.
when the diamond-bead wire 33 in the wire sawing machine 100 cuts a sawing object specified, if a part being cut appears to be falling, an action force generated by the part being cut during falling will be transferred directly to the moving pulley 34 through the diamond-bead wire 33; the moving pulley 34 will transfer the action force to the rotating arm 310 after being stressed; the rotating arm 310 will pull the load release recovery component 351 to the rotation region D from the initial region C after being stressed, and rotate to a corresponding position in the rotation region D according to a size of the action force applied hereto, so as to prevent the diamond-bead wire 33 wound on the moving pulley 34 from being crushed by the falling object, attenuate and release the action force that the rotating arm 310 is stressed by the load release recovery component 351; when the action force on the rotating arm 310 is attenuated to a certain extent, if a force value of the action force is less than that of a restoring force of the load release recovery component 351, the load release recovery component 351 will drive the rotating arm 310 return slowly to the initial region C from the rotation region D, according to an attenuation of the action force on the rotating arm 310.

Additionally, when the diamond-bead wire 33 in the wire sawing machine 100 cuts a sawing object specified, if a certain part of the sawing object makes a cutting resistance acted on the diamond-bead wire 33 increase in a sudden, due to a plurality of factors including a difference in a dense or a material (such as the material of a marble block is uneven), the diamond-bead wire 33 will transfer the action force stressed thereof to the rotating arm 310; after being stressed, the rotating arm 310 will pull the load release recovery component 351 to the rotation region D from the initial region C, and rotate to a corresponding position in the rotation region D according to a size of the action force applied hereto, so as to prevent the diamond-bead wire 33 from being damaged by the resistance increased in a sudden, attenuate and release the action force stressed on the rotating arm 310, by the load release recovery component 351; when the action force on the rotating arm 310 is attenuated to a certain extent, if the force value of the action force is less than that of the restoring force of the load release recovery component 351, the load release recovery component 351 will drive the rotating arm 310 return slowly to the initial region C from the rotation region D, according to an attenuation of the action force on the rotating arm 310.

All above, the wire sawing machine has a plurality of advantages listed below:
1. when the diamond-bead wire 33 cuts into a harder material or gets stuck during cutting, the load release recovery action of the load release recovery component 351 may be applied to buffering the diamond-bead wire 33, thus decreasing a possibility of damages; at a same time, due to a great decrease on the possibility of damage of the diamond-bead wire 33, an accident of damage and injury caused by splashing of the diamond-bead wire 33 damaged is also greatly reduced, which facilitates to ensure a safety of an operator;
2. due to a relaxation role of the load release recovery component 33 during the cutting, the diamond-bead wire 33 has a relatively uniform force during cutting, and accordingly, a consumption of both wear and tear of the diamond-bead wire 33 will decrease greatly, which facilitates to extend a service life of the diamond-bead wire 33, decrease a cost and improve a cutting efficiency; while being able to decrease a cost of an energy consumption, labor and machine use; moreover, comparing to the prior arts, it decreases a limit of requiring an experienced technician to operate the wire sawing machine 100, thus it further lowers a manufacturing cost;
3. by arranging and using the movable cutting load release component 30, it is possible to make a buffer action to a circuit, an oil route, a mechanical transmission system of the machine as a whole, thus, to the machine as a whole, it is possible to reduce a maintenance rate, a failure rate, and a maintenance cost of the machine greatly; while it is possible to guarantee and extend a continuous working period of the wire sawing machine 100, and make the efficiency and a productivity of the machine improve greatly during the working period, thereby reducing a labor cost and improving the production efficiency greatly;
4. comparing to the prior arts that adopting a method of protecting the machine in a whole and the diamond-bead wire by damaging some parts, in a case of the part being cut from the concrete of the building is dropping, a setting of the movable cutting load release component 30 described in the present application, may facilitate to guarantee not only no damage to any parts, but also the working period to be continuous, thus it is possible to improve a working efficiency and reduce a manufacturing cost;
5. due to a setting of the movable cutting load release component 30, it is able to greatly reduce a limitation of a load carried by the machine in a whole, thus, it is possible to reduce a use of a plurality of manufacturing materials, lower a whole weight of the machine, making the machine lighter and more convenient for a transportation and an assembly, while the manufacturing cost is lower and a price is more affordable.

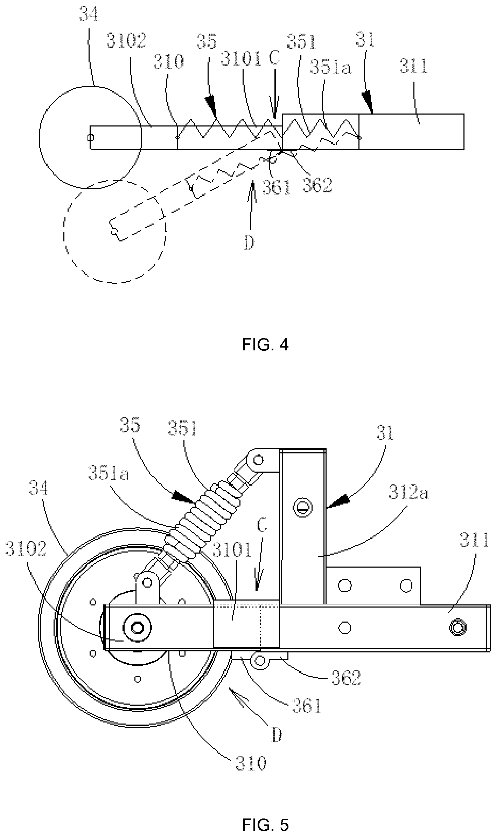

Referencing to FIG. 4, the load release recovery component 351 is an extension spring 351a, wherein, the extension spring 351a is also called an extension spring or a tension spring, which is a coil spring that takes an axial tension. The extension spring 351a is generally made by a material with a round cross-section, of course, the extension spring 351a may also be made by a material with other shaped cross-section including a rectangular cross-section. When there is no load applied, two coils in the extension spring 351a are usually close to each other without any gaps. Wherein, when the rotating arm 310 is locating in the initial region C, the extension spring 351a is contracted to close; when the rotating arm 310 turns to the rotation region D, the extension spring 351a may stretch and extend according to a size of the action force transmitted from the rotating arm 310. In addition, the extension spring 351a is convenient to both manufacturing and installation.

Then, when the moving pulley 34 is pressed by the action force transmitted from the diamond-bead wire 33, the extension spring 351a will be stretched and extended following a rotation of the rotating arm 310, that buffers and attenuates the action force transmitted after the rotating arm 310 is pressed, so as to achieve an aim of load releasing to the diamond-bead wire 33; when the action force on the rotating arm 310 is attenuated to a certain extent, if a force value of the action force is less than that of a restoring force of the extension spring 351a, the extension spring 351a will drive the rotating arm 310 return slowly to the initial region C from the rotation region D, according to an attenuation of the action force on the rotating arm 310, while the extension spring 351a will also retract to close following the rotating arm 310 returning to the initial region C from the rotation region D.

Preferably, one end of the extension spring 351a connects to the first supporting arm 311, while another end of the extension spring 351a is connected to the rotating arm 310, and close to the moving pulley 34 arranged on the rotating arm 310, while a centerline of the extension spring 351a overlaps a centerline of the rotating arm 310 when the rotating arm 310 locates in the initial region C, that means, an angle between the centerline of the extension spring 351a and the centerline of the rotating arm 310 locating in the initial region C is 0°.

Referencing to FIG. 4, the first end 3101 of the rotating arm 310 in the present embodiment has a first rotation portion 361 arranged, and the first supporting arm 311 has a second rotation portion 362 arranged, which rotationally fits the first rotation portion 361, the first end 3101 of the rotating arm 310 rotationally fits the second rotation portion 362 through the first rotation portion 361 before being rotationally arranged on the first supporting arm 311, wherein, by arranging the first rotation portion 361 and the second rotation portion 362, it achieves a setting in rotation between the first end 3101 of the rotating arm 310 and the first supporting arm 311 simply and affectively.

In order to facilitate installing and setting, the first rotation portion 361 is arranged on a bottom end of the first end 3101 of the rotating arm 310, the second rotation portion 362 is arranged on a bottom end of the first supporting arm 311, while the first rotation portion 361 and the second rotation portion 362 connect in a combined way, forming a hinge.

Of course, an implementation of the first rotation portion 361 and the second rotation portion 362 is not limited thereto, it is also possible to set the first rotation portion 361 to be a bearing or a plug shaft, while the second rotation portion 362 is set accordingly to be a plug shaft or a bearing. Wherein, a fitting in rotation between the plug shaft and the bearing, not only better achieves the fitting in rotation between the first end 3101 of the rotating arm 310 and the first supporting arm 311, but also facilitates the manufacturing and installation.

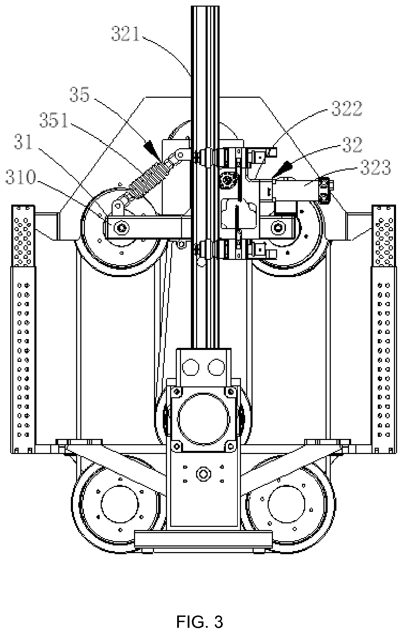

Referencing to FIG. 3, a preferred implementation method of the elevation mechanism 32 in the present embodiment is: the elevation mechanism 32 comprises a sliding rail 321, arranged on the installation base 10 and extending upwards, a sliding seat 322 slidably arranged on the sliding rail 321, a second driving source 323 arranged on the sliding seat 322 and connected to the sliding rail 321 before driving the sliding seat 322 to slide and work, the movable supporting frame 31 connects to the sliding seat 322, wherein, a sliding wheel being able to slidably engage with the sliding rail 321 is arranged on the sliding seat 322, while the sliding wheel plays not only a sliding action, but a guiding action.

Then, when it is needed that the movable supporting frame 31 slides up and down, then only the second driving source 323 is controlled to work, before transmitting a driving power to the sliding seat 322, and the sliding seat 322 will then slide up or down according to a control instruction, while the movable supporting frame 31 connected to the sliding seat 322 will then be able to slide up or down following the sliding seat 322. A whole operation is easy and convenient, being able to control effectively a sliding position of the movable supporting frame 31.

Wherein, the second driving source 323 is a hydraulic drive motor, ensuring an enough driving power to drive the movable supporting frame 31 to move up and down; the sliding rail 321 has a dentate region (not shown in the FIGs.). Preferably, the dentate region may be formed by arranging a rack on the sliding rail 321, and at a same time, the dentate region extends along a same direction that the sliding rail 321 extends. And an output end of the hydraulic drive motor is engaged with the dentate region.

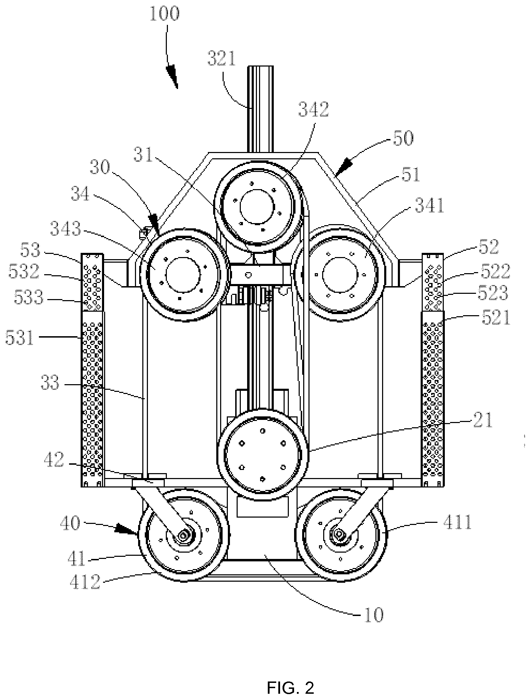

Referencing to FIGs. 1 and 2, the wire sawing machine 100 in the present embodiment further comprises a protection shield 50 applied to preventing the diamond-bead wire 33 from breaking and splashing before injuring a person. The protection shield 50 comprises an upper protection shield 51 applied to blocking the diamond-bead wire 33 from splashing toward an upper side of the movable supporting frame 31 after being broken, a first side protection shield 52 arranged telescopically to follow the movable supporting frame 31 from sliding up and down before blocking the diamond-bead wire 33 from splashing toward one side of the movable supporting frame 31 after being broken, and a second side protection shield 53 arranged telescopically to follow the movable supporting frame 31 from sliding up and down before blocking the diamond-bead wire 33 from splashing toward another side of the movable supporting frame 31 after being broken;
the upper protection shield 51 is arranged on the movable supporting frame 31, covering the upper side of the movable supporting frame 31;
an upper end of the first side protection shield 52 connects to one side of the movable supporting frame 31, a lower end of the first side protection shield 52 connects to one side of the wire retracting rack 42;
an upper end of the second side protection shield 53 connects to another side of the movable supporting frame 31, a lower end of the second side protection shield 53 connects to another side of the wire retracting rack 42.

Thus, through setting the protection shield 50, even a case of the diamond-bead wire 33 broken and splashing out happens, the diamond-bead wire 33 is blocked and limited to a range set by the protection shield 50, that ensures greatly a safety of a worker; moreover, due to the first side protection shield 52 and the second side protection shield 53 are arranged telescopically to follow the movable supporting frame 31 to slide up and down, thus, the first side protection shield 52 and the second side protection shield 53 are able to be adjusted according to a change or movement of the position of the diamond-bead wire 33 being arranged, thus being able to fully shield the diamond-bead wire 33, and that improves greatly the safety of the workers.

A preferred embodiment of the first side protection shield 52 is: the first side protection shield 52 comprises a first fixing shield 521 and a first moving shield 522, a lower end of the first fixing shield 521 connects to one side of the wire retracting rack 42, and an upper end of the first moving shield 522 connects to one side of the movable supporting frame 31, a lower end of the first moving shield 522 connects slidably to an upper end of the first fixing shield 521. By a relative sliding movement between the first fixing shield 521 and the first moving shield 522, it is able to achieve a telescopic setting of the first side protection shield 52 simply and effectively.

A preferred embodiment of the second side protection shield 53 is: the second side protection shield 53 comprises a second fixing shield 531 and a second moving shield 532, a lower end of the second fixing shield 531 connects to another side of the wire retracting rack 42, and an upper end of the second moving shield 532 connects to another side of the movable supporting frame 31, a lower end of the second moving shield 532 connects slidably to an upper end of the second fixing shield 531. By a relative sliding movement between the second fixing shield 531 and the second moving shield 532, it is able to achieve a telescopic setting of the second side protection shield 53 simply and effectively.

Preferably, in order to discharge a fluid of water mixed with a mud, a powder and more, generated during a cutting process of the wire sawing machine 100 out of the protection shield 50 on time, and avoid the fluid of water mixed with the mud, the powder and more accumulated on the protection shield 50 from affecting a normal working of the wire sawing machine 100, a plurality of first outflow holes 523 are arranged in the first side protection shield 52, applied to discharging the fluid generated during the process of the diamond-bead wire 33 cutting, specifically, a plurality of first outflow holes 523 are arranged in both the first fixing shield 521 and the first moving shield 522, and the plurality of first outflow holes 523 are arranged in an array, such as a rectangular array;

Similarly, a plurality of second outflow holes 533 are arranged in the second side protection shield 53, applied to discharging the fluid generated during a process of the diamond-bead wire 33 cutting, specifically, a plurality of second outflow holes 533 are arranged in both the second fixing shield 531 and the second moving shield 532, and the plurality of second outflow holes 533 are arranged in an array, such as a rectangular array;

A working principle of a load release process of the wire sawing machine 100 described in the present embodiment is further described below, with referencing to each of the plurality of drawings:
when the diamond-bead wire 33 in the wire sawing machine 100 cuts a sawing object specified, if a part being cut appears to be falling, an action force generated by the part being cut during falling will be transferred directly to the moving pulley 34 through the diamond-bead wire 33; the moving pulley 34 will transfer the force to the rotating arm 310 after being stressed; the rotating arm 310 will pull the load release recovery component 351 to the rotation region D from the initial region C after being stressed, and rotate to a corresponding position in the rotation region D according to a size of the action force applied hereto, so as to prevent the diamond-bead wire 33 wound on the moving pulley 34 from being crushed by the falling object, attenuate and release the action force that the rotating arm 310 is stressed by the load release recovery component 351; when the action force on the rotating arm 310 is attenuated to a certain extent, if a force value of the action force is less than that of a restoring force of the load release recovery component 351, the load release recovery component 351 will drive the rotating arm 310 return slowly to the initial region C from the rotation region D, according to an attenuation of the action force on the rotating arm 310.

Additionally, when the diamond-bead wire 33 in the wire sawing machine 100 cuts a sawing object specified, if a certain part of the sawing object makes a cutting resistance acted on the diamond-bead wire 33 increase in a sudden, due to a plurality of factors including a difference in a dense or a material (such as the material of a marble block is uneven), the diamond-bead wire 33 will transfer the action force stressed thereof to the moving pulley 34,then the moving pulley 34 will transfer the action force to the rotating arm 310; after being stressed, the rotating arm 310 will pull the load release recovery component 351 to the rotation region D from the initial region C, and rotate to a corresponding position in the rotation region D according to a size of the action force applied hereto, so as to prevent the diamond-bead wire 33 from being damaged by the resistance increased in a sudden, attenuate and release the action force stressed on the rotating arm 310, by the load release recovery component 351; when the action force on the rotating arm 310 is attenuated to a certain extent, if the force value of the action force is less than that of the restoring force of the load release recovery component 351, the load release recovery component 351 will drive the rotating arm 310 return slowly to the initial region C from the rotation region D, according to an attenuation of the action force on the rotating arm 310.

### Embodiment II:

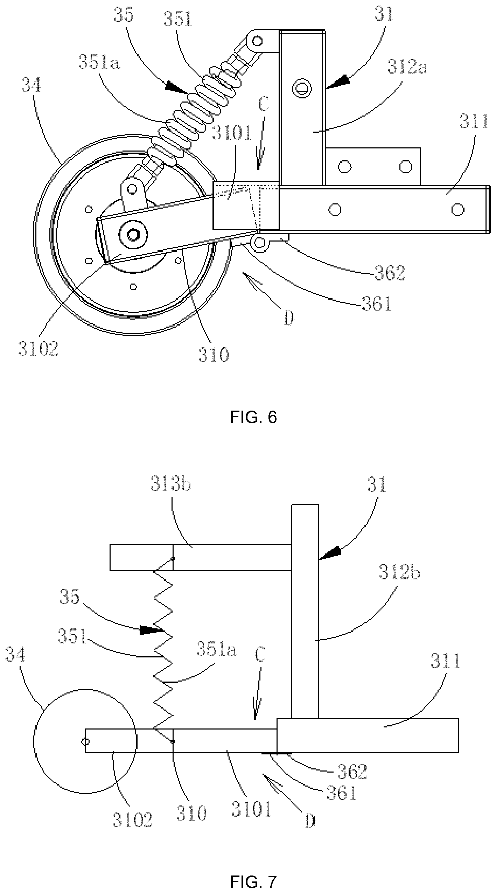

Referencing to FIGs. 5 and 6, an implementation method of the embodiment II is similar to that of the embodiment I, more details may refer to the description of the embodiment I, and will not be described here again, while a difference in between is:
In the embodiment I, one end of the extension spring 351a connects to the first supporting arm 311, while another end of the extension spring 351a is connected to the rotating arm 310, and close to the moving pulley 34 arranged on the rotating arm 310, while a centerline of the extension spring 351a overlaps a centerline of the rotating arm 310 when the rotating arm 310 locates in the initial region C.

In the embodiment II, the movable supporting frame 31 further comprises a second supporting arm 312a, arranged perpendicularly on an upper end of the first supporting arm 311;
one end of the extension spring 351a connects to the second supporting arm 312a, while another end of the extension spring 351a is connected to the rotating arm 310, and close to the moving pulley 34 arranged on the rotating arm 310, it is ensured that, at a same time of not affecting the moving pulley 34 working, the extension spring 351a is able to receive an action force transmitted from the rotating arm 310 fast, thus, it helps to achieve a goal of the load release for the diamond-bead wire 33 wound on the moving pulley 34; and a centerline of the extension spring 351a has an angle θ away from the centerline of the rotating arm 310 when the rotating arm 310 locates in the initial region C, and 0°< θ < 90°, preferably, the angle is 45° , that makes the extension spring 351a generate a better elastic buffering force, and ensures an operation of load release to the diamond-bead wire 33 wound on the moving pulley 34.

### Embodiment III:

Referencing to FIG. 7, an implementation of the embodiment III is similar to that of the embodiment II, detailed descriptions may be referencing to that of the embodiment II, and will not be stated in details herein. However, a difference in between is:
In the embodiment II, the movable supporting frame 31 further comprises the second supporting arm 312a, arranged perpendicularly above the first supporting arm 311;
one end of the extension spring 351a connects to the second supporting arm 312a, and another end of the extension spring 351a is connected to the rotating arm 310, close to the moving pulley 34 arranged on the rotating arm 310, while the centerline of the extension spring 351a has an angle θ away from the centerline of the rotating arm 310 when the rotating arm 310 locates in the initial region C, and 0°< θ <90°.

In the embodiment III, the movable supporting frame 31 further comprises a second supporting arm 312b and a third supporting arm 313b, wherein, it should be noted that, the second supporting arm 312b in the embodiment III, although having a name, position arranged same to the second supporting arm 312a in the embodiment II, they make a different function; the third supporting arm 313b is located above and arranged opposite to the rotating arm 310, and the third supporting arm 313b is arranged in parallel to the rotating arm 310 when the rotating arm 310 locates in the initial region C, one end of the second supporting arm 312b connects to the first supporting arm 311 in perpendicular, while another end of the second supporting arm 312b connects to the third supporting arm 313b;
one end of the extension spring 351a connects to the third supporting arm 313b, another end of the extension spring 351a is connected to the rotating arm 310, and close to the moving pulley 34 arranged on the rotating arm 310, at a same time of not affecting the moving pulley 34 working, the extension spring 351a is able to receive an action force transmitted from the rotating arm 310 fast, thus, it helps to achieve a goal of the load release for the diamond-bead wire 33 wound on the moving pulley 34; while the centerline of the extension spring 351a perpendicularly intersects to the centerline of the rotating arm 310 when the rotating arm 310 locates in the initial region C.

Since the centerline of the extension spring 351a perpendicularly intersects the centerline of the rotating arm 310 when the rotating arm 310 locates in the initial region C, when the action force on the rotating arm 310 is buffered and attenuated to a certain extent, if the force value of the action force is less than that of the restoring force of the extension spring 351a, comparing to a plurality of other settings of the extension spring 351a, a resistance that the extension spring 351a suffers when making an elastic recovery is smaller, that may drive the rotating arm 310 to return to the initial region C from the rotation region D faster, ensuring the cutting device 30 returning to a position of normal working faster.

### Embodiment IV:

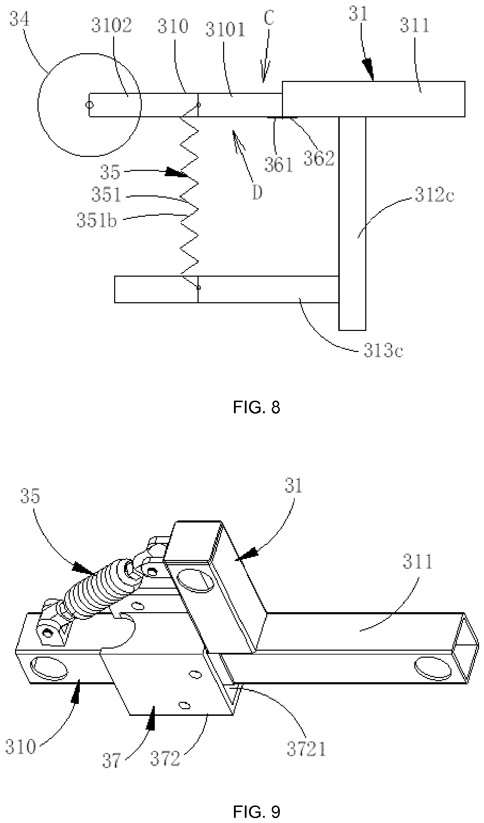

Referencing to FIG. 8, an implementation of the embodiment IV is similar to that of the embodiment III, detailed descriptions may be referencing to that of the embodiment III, and will not be stated in details herein. However, a difference in between is:
In the embodiment III, the load release recovery component 351 is the extension spring 351a.

The movable supporting frame 31 further comprises the second supporting arm 312b and the third supporting arm 313b, the third supporting arm 313b is located above and arranged opposite to the rotating arm 310, and the third supporting arm 313b is arranged in parallel to the rotating arm 310 when the rotating arm 310 locates in the initial region C, one end of the second supporting arm 312b connects to the first supporting arm 311 in perpendicular, while another end of the second supporting arm 312b connects to the third supporting arm 313b;
one end of the extension spring 351a connects to the third supporting arm 313b, another end of the extension spring 351a is connected to the rotating arm 310, and close to the moving pulley 34 arranged on the rotating arm 310, while the centerline of the extension spring 351a perpendicularly intersects the centerline of the rotating arm 310 when the rotating arm 310 locates in the initial region C.

In the embodiment IV, the load release recovery component 351 is a compression spring 351b. Wherein, the compression spring 351b is a coil spring that bears an axial pressure, due to bearing a pressure, both ends of the compression spring 351b may be open or close or flattened or smoothed, a cross-section of a material thereof is mainly a circle, or a rectangular or a multi-strand steel rope, and the compression spring 351b may have an equal pitch or a variable pitch. A shape of the compression spring 351b may be a cylinder, a cone, may be convex or concave at a center, may even be a non-circle or a plurality of various variants on a tail end. Coils in the compression spring 351b have a certain gap, and the compression spring 351b shrinks and deforms, when subjected to an external load, that stores deformation energy.

The movable supporting frame 31 further comprises a second supporting arm 312c and a third supporting arm 313c, wherein, it should be noted that, the second supporting arm 312c and the third supporting arm 313c in the embodiment IV, although having a name same to the second supporting arm 312b and the third supporting arm 313b in the embodiment III, they have a different position and make a different function; the third supporting arm 313c is located below and arranged opposite to the rotating arm 310, and the third supporting arm 313c is arranged in parallel to the rotating arm 310 when the rotating arm 310 locates in the initial region C, one end of the second supporting arm 312c connects to the first supporting arm 311 in perpendicular, while another end of the second supporting arm 312c connects to the third supporting arm 313c in perpendicular;
one end of the compression spring 351b connects to the third supporting arm 313c, another end of the compression spring 351b is connected to the rotating arm 310 which is close to the moving pulley 34, so as to ensure that the compression spring 351b is able to receive the action force transmitted from the rotating arm 310 fast, without affecting the moving pulley 34, which facilitates a purpose of load release for the diamond-bead wire 33 arranged on the moving pulley 34; while the centerline of the compression spring 351b perpendicularly intersects the centerline of the rotating arm 310 when the rotating arm 310 locates in the initial region C, wherein, when the rotating arm 310 locates in the initial region C, the compression spring 351b is stretched open; and when the rotating arm 310 turns to the rotation region D, the compression spring 351b may make a corresponding shrink according to a size of the action force transmitted from the rotation arm 310.

When the moving pulley 34 is subjected to a compression transmitted from the diamond-bead wire 33 wound on the moving pulley 34, the rotating arm 310 will take the moving pulley 34 rotate downwards, and compress the compression spring 351b, the compression spring 351b will make a corresponding shrink and close according to the size of the action force subjected hereof, while buffering and attenuating the action force transmitted from the rotating arm 310, so as to achieve the purpose of load release for the diamond-bead wire 33 wound on the moving pulley 34; when the action force on the rotating arm 310 is buffered and attenuated to a certain extent, if the force value of the action force is less than that of the restoring force of the compression spring 351b, the compression spring 351b will drive the rotating arm 310 return slowly to the initial region C from the rotation region D, according to an attenuation of the action force on the rotating arm 310, while being stretched and extended following the rotating arm 310 returning to the initial region C from the rotation region D.

### Embodiment V:

Referencing to FIG. 9, an implementation of the embodiment V is similar to that of the embodiment I, detailed descriptions may be referencing to that of the embodiment I, and will not be stated in details herein. However, a difference in between is:
in the embodiment V, the movable cutting load release component 30 further comprises a fixation mechanism 37, applied to locking and fixing the rotating arm 310, in order to fix the rotating arm 310 at any one position between the initial region C and the rotation region D.

Through a setting of the fixation mechanism 37, it is possible to fix the rotating arm 310 to any one position between the initial region C and the rotation region D, thus making the rotating arm 310 from being arranged rotatablly on the first supporting arm 311 and being able to be adjusted freely, to be arranged fixedly on the first supporting arm 311. Therefore, in a case of taking an processing efficiency of the cutting equipment as a first priority, it is possible to fix the rotating arm 310 in the initial region C by the fixation mechanism 37, and the cutting device 30 will also be fixed following a fixation of the rotating arm 310, that makes the cutting device 30 locating in the initial region C have a best cutting efficiency, and it is possible to adjust the cutting equipment in a whole to be one having a high processing efficiency;

Preferably, the fixation mechanism 37 in the present embodiment comprises a locking screw (not shown in the figures), one end of the locking screw connects to the rotating arm 310, another end connects to the first supporting arm 311. An arrangement of the locking screw is easy to install, with a simple structure.

### Embodiment VI:

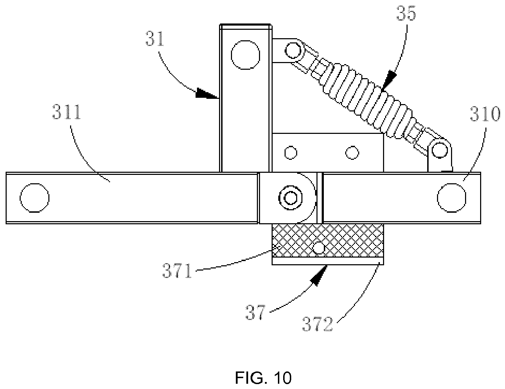

Referencing to FIG. 9 and FIG. 10, an implementation of the embodiment VI is similar to that of the embodiment V, detailed descriptions may be referencing to that of the embodiment V, and will not be stated in details herein. However, a difference in between is:
in the embodiment V, the fixation mechanism 37 comprises a locking screw, and one end of the locking screw connects to the rotating arm 310, while another end connects to the first supporting arm 311.

In the embodiment VI, the fixation mechanism 37 comprises a vibration damping pad 371, and a holder 372 applied to holding and positioning the vibration damping pad 371, the holder 372 connects fixedly to the supporting frame 10, and the holder 372 has an accommodation groove 3721 arranged, applied to accommodating the vibration damping pad 371, the accommodation groove 3721 accommodates a connection part between the rotating arm 310 and the first supporting arm 311; the vibration damping pad 371 is arranged in the accommodation groove 3721, and touches both of the rotating arm 310 and the first supporting arm 311.

Wherein, with an arrangement of the vibration damping pad 371, it is possible to set a different hardness according to any actual requirements. If it is needed for the vibration damping pad 371 to totally resist both of the rotating arm 310 and the first supporting arm 311, so as to fix the rotating arm 310 in the initial region C, it is possible to select a vibration damping pad 371 with a Shore hardness of 70-100 HA, while most of the cases like this are taking the processing efficiency of the cutting equipment as a first priority; if it is needed that the vibration damping pad 371 makes an action of buffering and damping to the rotating arm 310, it is possible to select a vibration damping pad 371 with a Shore hardness of 30-60 HA. Also, it may be seen that, the setting of the vibration damping pad 371 may be flexibly set according to an actual situation and a customer need.

In addition, the vibration damping pad 371 may be made of a rubber material, or other plastic materials, or other soft vibration damping materials.

### Embodiment VII:

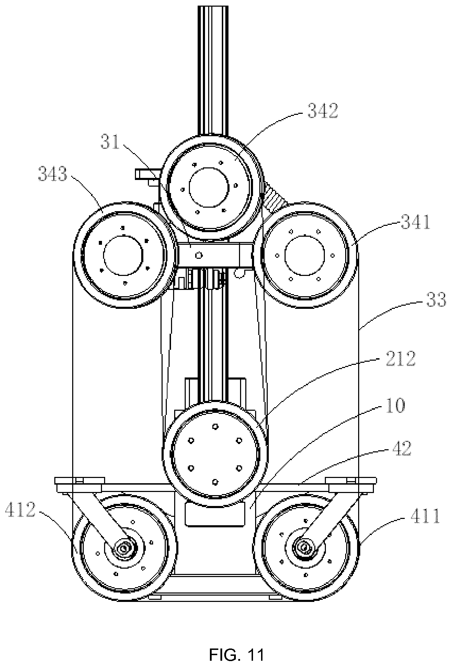

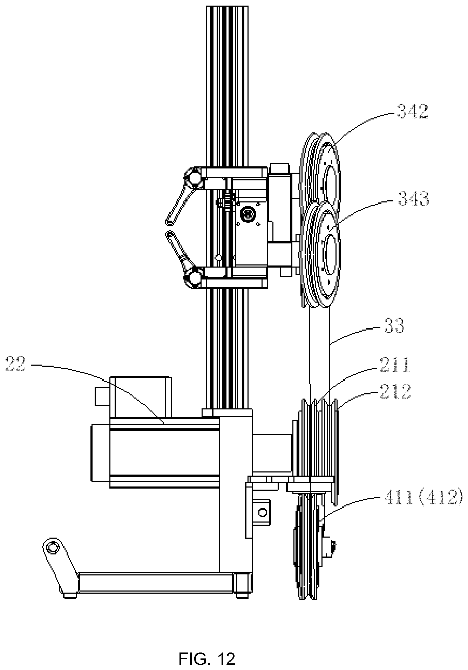

Referencing to FIG. 11 and FIG. 12, an implementation of the embodiment VII is similar to that of the embodiment I, detailed descriptions may be referencing to that of the embodiment I, and will not be stated in details herein. However, a difference in between is:
In the embodiment VII, at least one driving pulley 21, at least one moving pulley 34, at least one wire retracting pulley 41 are not totally arranged on a same plane.

Since the at least one driving pulley 21, the at least one moving pulley 34, the at least one wire retracting pulley 41 are not totally arranged on a same plane, thus, it may increase an activity space of the diamond-bead wire 33 wound on each of the pulleys, may increase a set length of the diamond-bead wire 33, and increase a cutting stroke of the wire saw machine 100. Thus, even a building concrete or a marble block has a higher height, it is still able to allow the machine continue executing the cutting operation normally, by adjusting the set length of the diamond-bead wire 33, and that lowers a manufacturing cost, as well as ensures a production efficiency.

Referencing to FIG. 12, specifically, the at least one driving pulley 21, the at least one wire retracting pulley 41 are arranged on a same plane, and the plane is defined as a first plane, at least one of the moving pulley 34 are not arranged on the first plane, but in a plane having an angle to the first plane. And through arranging the at least one moving pulley 34 not on the first plane and having an angle to the first plane, it may not only facilitate an installation worker to install and set, but also facilitate the worker to adjust the set length of the diamond-bead wire 33, facilitating the cutting stroke of the machine.

Preferably, the driving pulley 21 is arranged in two, defined as a first driving pulley 211 and a second driving pulley 212 respectively, the first driving pulley 211 and the second driving pulley 212 are stacked on the first plane from bottom up.

The moving pulley 34 is arranged in three, and defined as a first moving pulley 341, a second moving pulley 342 and a third moving pulley 343 respectively, the first moving pulley 341, the second moving pulley 342 and the third moving pulley 343 are arranged in an interval way on the movable supporting frame 31 following a lateral direction of the movable supporting frame 31, and the second moving pulley 342 is located between the first moving pulley 341 and the third moving pulley 343. Specifically, the first moving pulley 341 is installed on the first supporting arm 311, while the third moving pulley 343 is arranged on the rotating arm 310; the second moving pulley 342 is not arranged in the first plane, but having an angle to the first plane; one of the first moving pulley 341 and the third moving pulley 343 is not arranged in the first plane, but having an angle to the first plane, another of the first moving pulley 341 and the third moving pulley 343 is arranged in the first plane, specifically, the third moving pulley 343 is not arranged in the first plane, but having an angle to the first plane, and the first moving pulley 341 is arranged in the first plane;

The wire retracting pulley 41 is arranged in two, and defined as a first wire retracting pulley 411, a second wire retracting pulley 412 respectively, the first wire retracting pulley 411 and the second wire retracting pulley 412 are arranged in an interval way on the wire retracting rack 42, following a lateral direction of the wire retracting rack 42, and both the first wire retracting pulley 411 and the second wire retracting pulley 412 are arranged in the first plane.

Wherein, since the first driving pulley 211, the second driving pulley 212, the third driving pulley 213, the first wire retracting pulley 411 and the second wire retracting pulley 412 are arranged in the first plane, while the first moving pulley 341 and the second moving pulley 342 are not arranged in the first plane, and having an angle to the first plane, thus, comparing to a method of all of the pulleys are arranged in the first plane, the method described above makes the diamond-bead wire 33 six times more activity space, that has greatly increased the set length of the diamond-bead wire 33.

Referencing to FIG. 11, in order to arrange each of the pulleys in a rational way, and ensure each pulley has no interaction to each other during working, an arrangement of each of the pulleys described in the present embodiment is as follows:
The first driving pulley 211 and the second driving pulley 212 are superposed and mounted at an intermediate position of the installation base 10;

The first moving pulley 341 and the third moving pulley 343 are arranged on both sides of the movable supporting frame 31 respectively, the second moving pulley 342 is arranged at an intermediate position of the movable supporting frame 31, and opposite to the first driving pulley 211 and the second driving pulley 212 superposed;

The first wire retracting pulley 411 and the second wire retracting pulley 412 are arranged on both sides of the wire retracting rack 42 respectively and symmetrically.

Preferably, to avoid the second moving pulley 342 from colliding with the first driving pulley 211 and the second driving pulley 212 superposed, the second moving pulley 342 locates above the first moving pulley 341 and the third moving pulley 343.

Referencing to FIG. 12, the first driving source 22 in the present embodiment is a motor, two output ends of the motor are connected with the first driving pulley 211 and the second driving pulley 212 superposed respectively, wherein, due to an arrangement of the movable cutting load release component 30, it has greatly decreased a limitation requirement on a carrying ability of the machine, and it is able to decrease a usage of a manufacturing material, lower a whole weight of the machine, thus, that may also greatly decrease a driving force that the first driving source 22 needed. It is understandable that, only arranging one singe motor, it may reach a driving power required, that greatly decreases a manufacturing cost of the wire-sawing machine 100.

### Embodiment VIII:

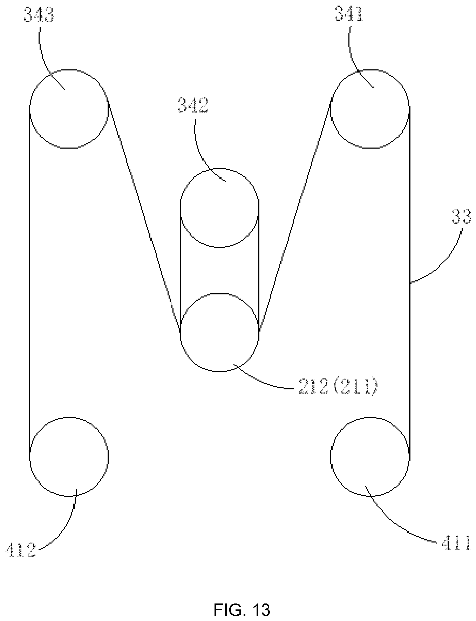

Referencing to FIG 13, an implementation method of the embodiment VIII is similar to that of the embodiment VII, more details may refer to the description of the embodiment V, and will not be described here again, while a difference in between is:
in the embodiment VII, the second moving pulley 342 locates above the first moving pulley 341 and the third moving pulley 343.

In the embodiment VIII, the second moving pulley 342 locates below the first moving pulley 341 and the third moving pulley 343, and preferably, it is possible to arrange a plurality of reminders including a sensor, a position limiter or else, so as to remind the workers that the second moving pulley 342 may collide with the first driving pulley 211 and the second driving pulley 212 superimposed.

### Embodiment IX:

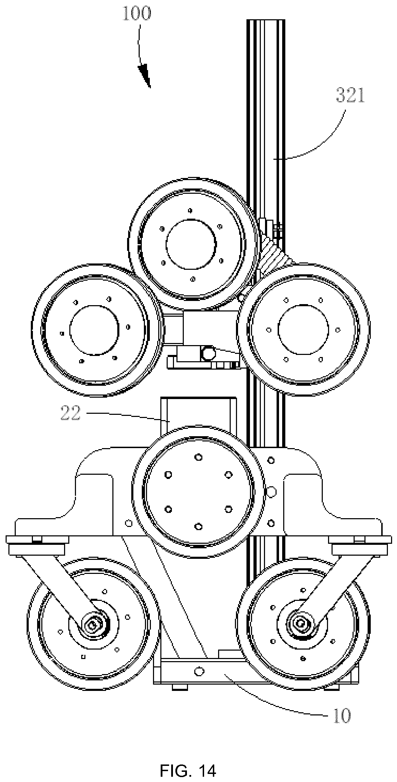

Referencing to FIG 14, an implementation method of the embodiment IX is similar to that of the embodiment I, more details may refer to the description of the embodiment I, and will not be described here again, while a difference in between is:
in the embodiment I, the first driving source 22 is arranged in the installation base 10, while the sliding rail 321 is arranged on the installation base 10, that means, the first driving source 22 is below the sliding rail 321, and, in order to ensure a stable setting of the first driving source 22 and the sliding rail 321, as well as other parts for supporting, generally, the installation base 10 may be made of metal materials including steel, so as to bring it a larger carrying ability, accordingly, that will also make a weight of the wire-sawing machine 100 in a whole larger, bringing the manufacturing cost higher in a whole, and harming a transportation and a movement of the machine.

In the embodiment IX, the first driving source 22 locates on a side end of the sliding rail 321. Specifically, the first driving source 22 is mounted on the installation base 10 through a supporting frame, and the sliding rail 321 is fixedly mounted on the installation base 10, and that makes the first driving source 22 locate on the side end of the sliding rail 321. However, due to two of them are not arranged on the installation base 10 at a same time, the installation base 10 may require a less carrying ability, that means, a supporting part of the installation base 10 and a plurality of other supporting frames may be made of an aluminum alloy material in a lighter weight, therefore, that makes a weight of the wire-sawing machine 100 in a whole decrease, not only lowers the manufacturing cost in a whole, but also helps a transportation and a movement of the machine.

The above descriptions are only the preferred embodiments of the present invention, and the configuration is not limited to the above-listed shapes, and any modifications falling within the scope of the claims are also to be protected.

## Claims

1. A wire sawing machine (100), comprising:
an installation base (10),
a drive component (20), the drive component (20) comprises at least one driving pulley (21) and a first driving source (22) applied to driving the at least one driving pulley (21) rotate and work, wherein the at least one driving pulley (21) is rotatably mounted on the installation base (10), the first driving source (22) is mounted on the installation base (10), and connected to the at least one driving pulley (21); **characterized by**
a movable cutting load release component (30), the movable cutting load release component (30) comprises a movable supporting frame (31) being able to slide up and down above the installing base, an elevation mechanism (32) applied to making the movable supporting frame (31) slide up and down, a diamond-bead wire (33) applied to cutting and processing a sawing object, at least one moving pulley (34) applied to approaching the sawing object and guiding the diamond-bead wire (33) cutting and processing the sawing object; and
a wire retracting component (40), the wire retracting component (40) comprises at least one wire retracting pulley (41), and a wire retracting rack (42) applied to mounting the at least one wire retracting pulley (41), the wire retracting rack (42) is mounted on the installation base (10), the at least one wire retracting pulley (41) is mounted rotatably on the wire retracting rack (42), and the at least one wire retracting pulley (41) is wound by the diamond-bead wire (33) output from the at least one moving pulley (34); wherein
the movable cutting load release component (30) further comprises a load release mechanism (35) applied to executing a load release operation to an abnormally excessive load acting on the diamond-bead wire (33) due to a plurality of abnormal reasons;
the movable supporting frame (31) comprises a rotating arm (310) and a first supporting arm (311), the rotating arm (310) comprises a first end (3101) and a second end (3102) arranged opposite to the first end (3101), the first end (3101) of the rotating arm (310) is mounted rotatably on the first supporting arm (311), and between the rotating arm (310) and the first supporting arm (311), there is an initial region arranged, which provides the rotating arm (310) to be stationary with respect to the first supporting arm (311), and a rotation region arranged, which provides the rotating arm (310) to be rotatable with respect to the first supporting arm (311); the elevation mechanism (32) is mounted on the installation base (10), and connected to the movable supporting frame (31); one of the at least one moving pulley (34) is mounted rotatably on the second end (3102) of the rotating arm (310); the diamond-bead wire (33) is wound on the at least one driving pulley (21) and the at least one moving pulley (34) respectively; the load release mechanism (35) comprises a load release recovery component (351) applied to releasing the abnormally excessive load acting on the moving pulley (34) mounted on the rotating arm (310) and transmitted from the diamond-bead wire (33), while driving the rotating arm (310) return to the initial region from the rotation region, one end of the load release recovery component (351) connects to the movable supporting frame (31), another end of the load release recovery component (351) connects to the rotating arm (310).

2. The wire sawing machine according to claim 1, wherein the load release recovery component (351) is an extension spring (351a).

3. The wire sawing machine according to claim 2, wherein one end of the extension spring (351a) connects to the first supporting arm (311), while another end of the extension spring (351a) is connected to the rotating arm (310), and close to the moving pulley (34) arranged on the rotating arm (310), while a centerline of the extension spring (351a) overlaps a centerline of the rotating arm (310) when the rotating arm (310) locates in the initial region.

4. The wire sawing machine according to claim 2, wherein the movable supporting frame (31) further comprises a second supporting arm (312a), the second supporting arm (312a) is arranged on top of the first supporting arm (311); one end of the extension spring (351a) connects to the second supporting arm (312a), and another end of the extension spring (351a) is connected to the rotating arm (310), and close to the moving pulley (34) arranged on the rotating arm (310), while the centerline of the extension spring (351a) has an angle θ away from the centerline of the rotating arm (310) when the rotating arm (310) locates in the initial region, and 0°< θ <90°.

5. The wire sawing machine according to claim 2, wherein the movable supporting frame (31) further comprises the second supporting arm (312b) and a third supporting arm (313b), the third supporting arm (313b) is located above and arranged opposite to the rotating arm (310), and the third supporting arm (313b) is arranged in parallel to the rotating arm (310) when the rotating arm (310) locates in the initial region, one end of the second supporting arm (312b) connects to the first supporting arm (311), while another end of the second supporting arm (312b) connects to the third supporting arm (313b);
one end of the extension spring (351a) connects to the third supporting arm (313b), another end of the extension spring (351a) is connected to the rotating arm (310), and close to the moving pulley (34) arranged on the rotating arm (310), while the centerline of the extension spring (351a) perpendicularly intersects the centerline of the rotating arm (310) when the rotating arm (310) locates in the initial region.

6. The wire sawing machine according to claim 1, wherein the load release recovery component (351) is a compression spring (351b).

7. The wire sawing machine according to claim 6, wherein the movable supporting frame (31) comprises the second supporting arm (312c) and the third supporting arm (313c), the third supporting arm (313c) is located below and arranged opposite to the rotating arm (310), and the third supporting arm (313c) is arranged in parallel to the rotating arm (310) when the rotating arm (310) locates in the initial region, one end of the second supporting arm (312c) connects to the first supporting arm (311), while another end of the second supporting arm (312c) connects to the third supporting arm (313c);
one end of the compression spring (351b) connects to the third supporting arm (313c), another end of the compression spring (351b) is connected to the rotating arm (310), and close to the moving pulley (34) arranged on the rotating arm (310), while the centerline of the compression spring (351b) perpendicularly intersects the centerline of the rotating arm (310) when the rotating arm (310) locates in the initial region.

8. The wire sawing machine according to any one of claims 1-7, wherein the movable cutting load release device further comprises a fixation mechanism (37), applied to fixing the rotating arm (310), in order to fix the rotating arm (310) at any one position between the initial region and the rotation region.

9. The wire sawing machine according to claim 8, wherein the fixation mechanism (37) comprises a locking screw, one end of the locking screw connects to the rotating arm (310), while another end thereof connects to the first supporting arm (311).

10. The wire sawing machine according to claim 8, wherein the fixation mechanism (37) comprises a vibration damping pad (371), and a holder (372) applied to holding and positioning the vibration damping pad (371), the holder (372) connects fixedly to the supporting frame, and the holder (372) has an accommodation groove (3721) arranged, applied to accommodating the vibration damping pad (371), the accommodation groove (3721) accommodates a connection part between the rotating arm (310) and the first supporting arm (311); the vibration damping pad (371) is arranged in the accommodation groove (3721), and touches both of the rotating arm (310) and the first supporting arm (311).

11. The wire sawing machine according to claim 1, wherein the at least one driving pulley (21), the at least one moving pulley (34), the at least one wire retracting pulley (41) are not totally arranged on a same plane.

12. The wire sawing machine according to claim 11, wherein the at least one driving pulley (21), the at least one wire retracting pulley (41) are arranged on a same plane, and the plane is defined as a first plane, at least one of the moving pulley (34) are not arranged on the first plane, but in a plane having an angle to the first plane.

13. The wire sawing machine according to claim 12, wherein the driving pulley (21) is arranged in two, defined as a first driving pulley (211) and a second driving pulley (212) respectively, the first driving pulley(211) and the second driving pulley (212) are stacked on the first plane;
the moving pulley (34) is arranged in three, and defined as a first moving pulley (341), a second moving pulley (342) and a third moving pulley (343) respectively, the first moving pulley (341), the second moving pulley (342) and the third moving pulley (343) are arranged in an interval way in the movable supporting frame (31) following a lateral direction of the movable supporting frame (31), and the second moving pulley (342) is located between the first moving pulley (341) and the third moving pulley (343), the second moving pulley (342) is not arranged on the first plane, but having an angle to the first plane; one of the first moving pulley (341) and the third moving pulley (343) is not arranged on the first plane, but having an angle to the first plane, another of the first moving pulley (341) and the third moving pulley (343) is arranged on the first plane;
the wire retracting pulley (41) is arranged in two, and defined as a first wire retracting pulley (411), a second wire retracting pulley (412) respectively, the first wire retracting pulley (411) and the second wire retracting pulley (412) are arranged in an interval way on the wire retracting rack (42), following a lateral direction of the wire retracting rack (42), and both the first wire retracting pulley (411) and the second wire retracting pulley (412) are arranged on the first plane.

14. The wire sawing machine according to claim 13, wherein the first driving pulley (211) and the second driving pulley (212) are superposed and mounted at an intermediate position of the installation base (10);
the first moving pulley (341) and the third moving pulley (343) are arranged on both sides of the movable supporting frame (31) respectively, the second moving pulley (342) is arranged at an intermediate position of the movable supporting frame (31), and opposite to the first driving pulley (211) and the second driving pulley (212) superposed;
the first wire retracting pulley (411) and the second wire retracting pulley (412) are arranged on both sides of the wire retracting rack (42) respectively.

15. The wire sawing machine according to claim 14, wherein the second moving pulley (342) locates above or below the first moving pulley (341) and the third moving pulley (343).

16. The wire sawing machine according to claim 13, wherein the first driving source (22) is a motor, two output ends of the motor are connected with the first driving pulley (211) and the second driving pulley (212) superposed respectively.

17. The wire sawing machine according to claim 1, wherein the elevation mechanism (32) comprises a sliding rail (321), arranged on the installation base (10) and extending upwards, a sliding seat (322) slidably arranged on the sliding rail (321), a second driving source (323) arranged on the sliding seat (322) and connected to the sliding rail (321) before driving the sliding seat (322) to slide and work, the movable supporting frame (31) connects to the sliding seat (322).

18. The wire sawing machine according to claim 17, wherein the second driving source (323) is a hydraulic drive motor, the sliding rail (321) has a dentate region arranged; the dentate region extends along a same direction that the sliding rail (321) extends; an output end of the hydraulic drive motor is engaged with the dentate region.

19. The wire sawing machine according to claim 17, wherein the first driving source (22) locates on a side end of the sliding rail (321).

20. The wire sawing machine according to claim 1, wherein further comprises a protection shield (50) applied to preventing the diamond-bead wire (33) damaged from splashing and injuring a person, the protection shield (50) comprises an upper protection shield (50) applied to blocking the diamond-bead wire (33) from splashing toward an upper side of the movable supporting frame (31) after being broken, a first side protection shield (52) arranged telescopically to follow the movable supporting frame (31) from sliding up and down, so as to block the diamond-bead wire (33) from splashing toward one side of the movable supporting frame (31) after being broken, and a second side protection shield (53) arranged telescopically to follow the movable supporting frame (31) from sliding up and down, so as to block the diamond-bead wire (33) from splashing toward another side of the movable supporting frame (31) after being broken;
the upper protection shield (51) is arranged on the movable supporting frame (31), covering the upper side of the movable supporting frame (31);
an upper end of the first side protection shield(52) connects to one side of the movable supporting frame (31), a lower end of the first side protection shield (52) connects to one side of the wire retracting rack (42);
an upper end of the second side protection shield (53) connects to another side of the movable supporting frame (31), a lower end of the second side protection shield (53) connects to another side of the wire retracting rack (42).

21. The wire sawing machine according to claim 20, wherein the first side protection shield (52) comprises a first fixing shield (521) and a first moving shield (522), a lower end of the first fixing shield (521) connects to one side of the wire retracting rack (42), and an upper end of the first moving shield (522) connects to one side of the movable supporting frame (31), a lower end of the first moving shield (522) connects slidably to an upper end of the first fixing shield (521);
the second side protection shield (53) comprises a second fixing shield (531) and a second moving shield (532), a lower end of the second fixing shield (531) connects to another side of the wire retracting rack (42), and an upper end of the second moving shield (532) connects to another side of the movable supporting frame (31), a lower end of the second moving shield (532) connects slidably to an upper end of the second fixing shield (531).

22. The wire sawing machine according to claim 20, wherein a plurality of first outflow holes (523) are arranged in the first side protection shield (52), applied to discharging a fluid generated during a process of the diamond-bead wire (33) cutting, and the plurality of first outflow holes (523) are arranged in an array;
a plurality of second outflow holes (533) are arranged in the second side protection shield (53), applied to discharging the fluid generated during a process of the diamond-bead wire (33) cutting, and the plurality of second outflow holes (533) are arranged in an array.

## Patentansprüche

1. Drahtsägemaschine (100), umfassend:
einen Installationssockel (10),
eine Antriebskomponente (20), wobei die Antriebskomponente (20) mindestens eine Antriebsriemenscheibe (21) und einer erste Antriebsquelle (22), die zum Antreiben der mindestens einen Antriebsriemenscheibe (21), derart dass sie sich dreht und arbeitet, eingesetzt wird, umfasst, wobei die mindestens eine Antriebsriemenscheibe (21) auf dem Installationssockel (10) drehbar angebracht ist und die erste Antriebsquelle (22) auf dem Installationssockel (10) angebracht und mit der mindestens einen Antriebsriemenscheibe (21) verbunden ist;
**gekennzeichnet durch**
eine bewegliche Schneidlast-Freigabekomponente (30), wobei die bewegliche Schneidlast-Freigabekomponente (30) einen beweglichen Tragrahmen (31), der über dem Installationssockel nach oben und nach unten gleiten kann, einen Hebemechanismus (32), der zum Bewirken, dass der bewegliche Tragrahmen (31) nach oben und nach unten gleitet, eingesetzt wird, einen Diamantperldraht (33), der zum Schneiden und Verarbeiten eines Sägegegenstands eingesetzt wird, und mindestens eine bewegliche Riemenscheibe (34), die zum Annähern an den Sägegegenstand und zum Führen des Schneidens und Verarbeitens des Sägegegenstands durch den Diamantperldraht (33) eingesetzt wird, umfasst; und
eine Drahteinziehkomponente (40), wobei die Drahteinziehkomponente (40) mindestens eine Drahteinzieh-Riemenscheibe (41) und ein Drahteinziehgestell (42), das zum Anbringen der mindestens einen Drahteinzieh-Riemenscheibe (41) eingesetzt wird, umfasst, das Drahteinziehgestell (42) auf dem Installationssockel (10) angebracht ist, die mindestens eine Drahteinzieh-Riemenscheibe (41) auf dem Drahteinziehgestell (42) drehbar angebracht ist und die mindestens eine Drahteinzieh-Riemenscheibe (41) von dem Diamantperldraht (33) umwickelt wird, der von der mindestens einen beweglichen Riemenscheibe (34) ausgegeben wird; wobei
die bewegliche Schneidlast-Freigabekomponente (30) ferner einen Lastfreigabemechanismus (35) umfasst, der zum Ausführen eines Lastfreigabevorgangs auf eine anomal übermäßige Last, die aufgrund mehrerer anomaler Ursachen auf den Diamantperldraht (33) wirkt, eingesetzt wird;
der bewegliche Tragrahmen (31) einen Dreharm (310) und einen ersten Tragarm (311) umfasst, der Dreharm (310) ein erstes Ende (3101) und ein zweite Ende (3102), das gegenüber dem ersten Ende (3101) angeordnet ist, umfasst, das erste Ende (3101) des Dreharms (310) auf dem ersten Tragarm (311) drehbar angebracht ist und zwischen dem Dreharm (310) und dem ersten Tragarm (311) ein Anfangsbereich, der dafür sorgt, dass der Dreharm (310) in Bezug auf den ersten Tragarm (311) fest ist, und ein Drehbereich, der dafür sorgt, dass der Dreharm (310) in Bezug auf den ersten Tragarm (311) drehbar ist, angeordnet sind; wobei der Hebemechanismus (32) auf dem Installationssockel (10) angebracht und mit dem beweglichen Tragrahmen (31) verbunden ist; wobei eine der mindestens einen beweglichen Riemenscheibe (34) an dem zweiten Ende (3102) des Dreharms (310) drehbar angebracht ist; wobei der Diamantperldraht (33) jeweils auf die mindestens eine Antriebsriemenscheibe (21) und die mindestens eine bewegliche Riemenscheibe (34) gewickelt wird; wobei der Lastfreigabemechanismus (35) eine Lastfreigabe-Rückstellkomponente (351) umfasst, die zum Freigeben der anomal übermäßigen Last, die auf die bewegliche Riemenscheibe (34), die auf dem Dreharm (310) angebracht ist, wirkt und vom Diamantperldraht (33) übertragen wird, während der Dreharm (310) aus dem Drehbereich zurück in den Anfangsbereich angetrieben wird, eingesetzt wird, ein Ende der Lastfreigabe-Rückstellkomponente (351) mit dem beweglichen Tragrahmen (31) verbunden ist und ein weiteres Ende der Lastfreigabe-Rückstellkomponente (351) mit dem Dreharm (310) verbunden ist.

2. Drahtsägemaschine nach Anspruch 1, wobei die Lastfreigabe-Rückstellkomponente (351) eine Zugfeder (351a) ist.

3. Drahtsägemaschine nach Anspruch 2, wobei ein Ende der Zugfeder (351a) mit dem ersten Tragarm (311) verbunden ist, während ein weiteres Ende der Zugfeder (351a) mit dem Dreharm (310) und nahe bei der beweglichen Riemenscheibe (34), die auf dem Dreharm (310) angeordnet ist, verbunden ist, während eine Mittellinie der Zugfeder (351a) mit einer Mittellinie des Dreharms (310) überlappt, wenn sich der Dreharm (310) im Anfangsbereich befindet.

4. Drahtsägemaschine nach Anspruch 2, wobei
der bewegliche Tragrahmen (31) ferner einen zweiten Tragarm (312a) umfasst und der zweite Tragarm (312a) über dem ersten Tragarm (311) angeordnet ist;
ein Ende der Zugfeder (351a) mit dem zweiten Tragarm (312a) verbunden ist und ein weiteres Ende der Zugfeder (351a) mit dem Dreharm (310) und nahe bei der beweglichen Riemenscheibe (34), die auf dem Dreharm (310) angeordnet ist, verbunden ist, während die Mittellinie der Zugfeder (351a) um einen Winkel θ von der Mittellinie des Dreharms (310) weg gerichtet ist, wenn sich der Dreharm (310) im Anfangsbereich befindet, und 0° < θ <90°.

5. Drahtsägemaschine nach Anspruch 2, wobei
der bewegliche Tragrahmen (31) ferner den zweiten Tragarm (312b) und einen dritten Tragarm (313b) umfasst, der dritte Tragarm (313b) über dem Dreharm (310) angeordnet und diesem gegenüber angeordnet ist und der dritte Tragarm (313b) parallel zum Dreharm (310) angeordnet ist, wenn sich der Dreharm (310) im Anfangsbereich befindet, wobei ein Ende des zweiten Tragarms (312b) mit dem ersten Tragarm (311) verbunden ist, während ein weiteres Ende des zweiten Tragarms (312b) mit dem dritten Tragarm (313b) verbunden ist;
ein Ende der Zugfeder (351a) mit dem dritten Tragarm (313b) verbunden ist, ein weiteres Ende der Zugfeder (351a) mit dem Dreharm (310) und nahe bei der beweglichen Riemenscheibe (34), die auf dem Dreharm (310) angeordnet ist, verbunden ist, während die Mittellinie der Zugfeder (351a) die Mittellinie des Dreharms (310) senkrecht kreuzt, wenn sich der Dreharm (310) im Anfangsbereich befindet.

6. Drahtsägemaschine nach Anspruch 1, wobei die Lastfreigabe-Rückstellkomponente (351) eine Druckfeder (351b) ist.

7. Drahtsägemaschine nach Anspruch 6, wobei
der bewegliche Tragrahmen (31) den zweiten Tragarm (312c) und den dritten Tragarm (313c) umfasst, der dritte Tragarm (313c) unter dem Dreharm (310) und diesem gegenüber angeordnet ist und der dritte Tragarm (313c) parallel zum Dreharm (310) angeordnet ist, wenn sich der Dreharm (310) im Anfangsbereich befindet, wobei ein Ende des zweiten Tragarms (312c) mit dem ersten Tragarm (311) verbunden ist, während ein weiteres Ende des zweiten Tragarms (312c) mit dem dritten Tragarm (313c) verbunden ist;
ein Ende der Druckfeder (351b) mit dem dritten Tragarm (313c) verbunden ist, ein weiteres Ende der Druckfeder (351b) mit dem Dreharm (310) und nahe bei der beweglichen Riemenscheibe (34), die auf dem Dreharm (310) angeordnet ist, verbunden ist, während die Mittellinie der Druckfeder (351) die Mittellinie des Dreharms (310) senkrecht kreuzt, wenn sich der Dreharm (310) im Anfangsbereich befindet.

8. Drahtsägemaschine nach einem der Ansprüche 1-7, wobei die bewegliche Schneidlast-Freigabevorrichtung ferner einen Arretierungsmechanismus (37), der zum Arretieren des Dreharms (310), um den Dreharm (310) an einer beliebigen Position zwischen der Ausgangsposition und der Drehungsposition zu arretieren, eingesetzt wird, umfasst.

9. Drahtsägemaschine nach Anspruch 8, wobei der Arretierungsmechanismus (37) eine Verriegelungsschraube umfasst, wobei ein Ende der Verriegelungsschraube mit dem Dreharm (310) verbunden ist, während ein weiteres Ende davon mit dem ersten Tragarm (311) verbunden ist.

10. Drahtsägemaschine nach Anspruch 8, wobei der Arretierungsmechanismus (37) einen Schwingungsdämpfungspuffer (371) und einen Halter (372), der zum Halten und Positionieren des Schwingungsdämpfungspuffers (371) eingesetzt wird, umfasst, der Halter (372) mit dem Tragrahmen fest verbunden ist und an dem Halter (372) eine Aufnahmerille (3721) angeordnet ist, die zum Aufnehmen des Schwingungsdämpfungspuffers (371) eingesetzt wird, und die Aufnahmerille (3721) eine Verbindungskomponente zwischen dem Dreharm (310) und dem ersten Tragarm (311) aufnimmt; wobei der Schwingungsdämpfungspuffer (371) in der Aufnahmerille (3721) angeordnet ist und sowohl den Dreharm (310) als auch den ersten Tragarm (311) berührt.

11. Drahtsägemaschine nach Anspruch 1, wobei die mindestens eine Antriebsriemenscheibe (21), die mindestens eine bewegliche Riemenscheibe (34) und die mindestens eine Drahteinzieh-Riemenscheibe (41) nicht vollständig in derselben Ebene angeordnet sind.

12. Drahtsägemaschine nach Anspruch 11, wobei die mindestens eine Antriebsriemenscheibe (21) und die mindestens eine Drahteinzieh-Riemenscheibe (41) in derselben Ebene angeordnet sind und die Ebene als eine erste Ebene definiert ist, wobei mindestens eine der beweglichen Riemenscheiben (34) nicht in der ersten Ebene, sondern in einer Ebene, die einen Winkel zur ersten Ebene aufweist, angeordnet ist.

13. Drahtsägemaschine nach Anspruch 12, wobei
die Antriebsriemenscheibe (21) zweifach angeordnet ist, als eine erste Antriebsriemenscheibe (211) bzw. als eine zweite Antriebsriemenscheibe (212) definiert ist und die erste Antriebsriemenscheibe (211) und die zweite Antriebsriemenscheibe (212) auf der ersten Ebene gestapelt sind;
die bewegliche Riemenscheibe (34) dreifach angeordnet ist und als eine erste bewegliche Riemenscheibe (341) bzw. eine zweite bewegliche Riemenscheibe (342) bzw. eine dritte bewegliche Riemenscheibe (343) definiert ist, wobei die erste bewegliche Riemenscheibe (341), die zweite bewegliche Riemenscheibe (342) und die dritte bewegliche Riemenscheibe (343) auf eine beabstandete Weise im beweglichen Tragrahmen (31) einer Seitenrichtung des beweglichen Tragrahmens (31) folgend angeordnet sind und die zweite bewegliche Riemenscheibe (342) zwischen der ersten beweglichen Riemenscheibe (341) und der dritten beweglichen Riemenscheibe (343) angeordnet ist und die zweite bewegliche Riemenscheibe (342) nicht in der ersten Ebene angeordnet ist, sondern einen Winkel zur ersten Ebene aufweist; wobei eine der ersten beweglichen Riemenscheibe (341) und der dritten beweglichen Riemenscheibe (343) nicht in der ersten Ebene angeordnet ist, sondern einen Winkel zur ersten Ebene aufweist, und eine andere der ersten beweglichen Riemenscheibe (341) und der dritten beweglichen Riemenscheibe (343) in der ersten Ebene angeordnet ist;
die Drahteinzieh-Riemenscheibe (41) zweifach angeordnet ist und als eine erste Drahteinzieh-Riemenscheibe (411) bzw. eine zweite Drahteinzieh-Riemenscheibe (412) definiert ist, die erste Drahteinzieh-Riemenscheibe (411) und die zweite Drahteinzieh-Riemenscheibe (412) auf eine beabstandete Weise auf dem Drahteinziehgestellt (42) einer Seitenrichtung des Drahteinziehgestells (42) folgend angeordnet sind und sowohl die erste Drahteinzieh-Riemenscheibe (411) als auch die zweite Drahteinzieh-Riemenscheibe (412) in der ersten Ebene angeordnet sind.

14. Drahtsägemaschine nach Anspruch 13, wobei
die erste Antriebsriemenscheibe (211) und die zweite Antriebsriemenscheibe (212) an einer Zwischenposition des Installationssockels (10) einander überlagert und angebracht sind;
die erste bewegliche Riemenscheibe (341) und die dritte bewegliche Riemenscheibe (343) jeweils auf beiden Seiten des beweglichen Tragrahmens (31) angeordnet sind und die zweite bewegliche Riemenscheibe (342) an einer Zwischenposition des beweglichen Tragrahmens (31) und gegenüber der ersten Antriebsriemenscheibe (211) und zweiten Antriebsriemenscheibe (212), die einander überlagert sind, angeordnet ist;
die erste Drahteinzieh-Riemenscheibe (411) und die zweite Drahteinzieh-Riemenscheibe (412) jeweils auf beiden Seiten des Drahteinziehgestells (42) angeordnet sind.

15. Drahtsägemaschine nach Anspruch 14, wobei sich die zweite bewegliche Riemenscheibe (342) über oder unter der ersten beweglichen Riemenscheibe (341) und der dritten beweglichen Riemenscheibe (343) befindet.

16. Drahtsägemaschine nach Anspruch 13, wobei die erste Antriebsquelle (22) ein Motor ist und zwei Ausgangsenden des Motors mit der ersten Antriebsriemenscheibe (211) bzw. der zweiten Antriebsriemenscheibe (212) die einander überlagert sind, verbunden sind.

17. Drahtsägemaschine nach Anspruch 1, wobei der Hebemechanismus (32) eine Gleitschiene (321), die auf dem Installationssockel (10) angeordnet ist und sich nach oben erstreckt, einen Gleitsitz (322), der auf der Gleitschiene (321) gleitend angeordnet ist, und eine zweite Antriebsquelle (323), die auf dem Gleitsitz (322) angeordnet und mit der Gleitschiene (321) verbunden ist, bevor der Gleitsitz (322) derart angetrieben wird, dass er gleitet und arbeitet, umfasst, wobei der bewegliche Tragrahmen (31) mit dem Gleitsitz (322) verbunden ist.

18. Drahtsägemaschine nach Anspruch 17, wobei die zweite Antriebsquelle (323) ein hydraulischer Antriebsmotor ist und an der Gleitschiene (32) ein gezahnter Bereich angeordnet ist; der gezahnte Bereich sich entlang derselben Richtung erstreckt, in der sich die Gleitschiene (321) erstreckt; und ein Ausgangsende des hydraulischen Antriebsmotors sich mit dem gezahnten Bereich in Eingriff befindet.

19. Drahtsägemaschine nach Anspruch 17, wobei sich die erste Antriebsquelle (22) auf einem Seitenende der Gleitschiene (321) befindet.

20. Drahtsägemaschine nach Anspruch 1, die ferner einen Schutzschild (50) umfasst, der eingesetzt wird, um zu verhindern, dass der Diamantperldraht (33) im Fall einer Beschädigung spritzt und eine Person verletzt, wobei der Schutzschild (50) einen oberen Schutzschild (50), der eingesetzt wird, um ein Spritzen des Diamantperldrahts (33) in Richtung einer oberen Seite des beweglichen Tragrahmens (31) aufzuhalten, nachdem er gebrochen ist, einen ersten Seitenschutzschild (52), der auf teleskopische Weise angeordnet ist, derart, dass er dem beweglichen Tragrahmen (31) beim Gleiten nach oben und nach unten folgt, um ein Spritzen des Diamantperldrahts (33) in Richtung einer Seite des beweglichen Tragrahmens (31) aufzuhalten, nachdem er gebrochen ist, und einen zweiten Seitenschutzschild (53), der auf teleskopische Weise angeordnet ist, derart, dass er dem beweglichen Tragrahmen (31) beim Gleiten nach oben und nach unten folgt, um ein Spritzen des Diamantperldrahts (33) in Richtung einer weiteren Seite des beweglichen Tragrahmens (31) aufzuhalten, nachdem er gebrochen ist, umfasst;
wobei
der obere Schutzschild (51) auf dem beweglichen Tragrahmen (31) angeordnet ist, wobei er die obere Seite des beweglichen Tragrahmens (31) abdeckt;
ein oberes Ende des ersten Seitenschutzschilds (52) mit einer Seite des beweglichen Tragrahmens (31) verbunden ist und ein unteres Ende des ersten Seitenschutzschilds (52) mit einer Seite des Drahteinziehgestells (42) verbunden ist;
ein oberes Ende des zweiten Seitenschutzschilds (53) mit einer weiteren Seite des beweglichen Tragrahmens (31) verbunden ist und ein unteres Ende des zweiten Seitenschutzschilds (53) mit einer weiteren Seite des Drahteinziehgestells (42) verbunden ist.

21. Drahtsägemaschine nach Anspruch 20, wobei
der erste Seitenschutzschild (52) einen ersten Arretierungsschild (521) und einen ersten beweglichen Schild (522) umfasst, ein unteres Ende des ersten Arretierungsschilds (521) mit einer Seite des Drahteinziehgestells (42) verbunden ist und ein oberes Ende des ersten beweglichen Schilds (522) mit einer Seite des beweglichen Tragrahmens (31) verbunden ist und ein unteres Ende des ersten beweglichen Schilds (522) mit einem oberen Ende des ersten Arretierungsschilds (521) gleitend verbunden ist;
der zweite Seitenschutzschild (53) einen zweiten Arretierungsschild (531) und einen zweiten beweglichen Schild (532) umfasst, ein unteres Ende des zweiten Arretierungsschilds (531) mit einer weiteren Seite des Drahteinziehgestells (42) verbunden ist und ein oberes Ende des zweiten beweglichen Schilds (532) mit einer weiteren Seite des beweglichen Tragrahmens (31) verbunden ist und ein unteres Ende des zweiten beweglichen Schilds (532) mit einem oberen Ende des zweiten Arretierungsschilds (531) gleitend verbunden ist.

22. Drahtsägemaschine nach Anspruch 20, wobei
mehrere erste Ausströmlöcher (523) im ersten Seitenschutzschild (52) angeordnet sind, die zum Auslassen eines Fluids, das während eines Prozesses des Schneidens mit dem Diamantperldraht (33) erzeugt wird, eingesetzt werden, und die mehreren ersten Ausströmlöcher (523) in einer Anordnung angeordnet sind;
mehrere zweite Ausströmlöcher (533) im zweiten Seitenschutzschild (53) angeordnet sind, die zum Auslassen des Fluids, das während eines Prozesses des Schneidens mit dem Diamantperldraht (33) erzeugt wird, eingesetzt werden, und die mehreren zweiten Ausströmlöcher (533) in einer Anordnung angeordnet sind.

## Revendications

1. Machine à scier à fil (100), comprenant :
une base d'installation (10),
un composant pilote (20), le composant pilote (20) comprenant au moins une poulie d'entraînement (21) et une première source d'entraînement (22) utilisée pour entraîner ladite au moins une poulie d'entraînement (21) pour la mettre en rotation et la faire fonctionner, dans laquelle ladite au moins une poulie d'entraînement (21) est montée en rotation sur la base d'installation (10), la première source d'entraînement (22) est montée sur la base d'installation (10), et est connectée à ladite au moins une poulie d'entraînement (21) ;
**caractérisée par**
un composant déplaçable de libération de charge de coupe (30), le composant déplaçable de libération de charge de coupe (30) comprenant un cadre de support déplaçable (31) qui est capable de coulisser vers le haut et vers le bas au-dessus de la base d'installation, un mécanisme d'élévation (32) utilisé pour faire s'élever et s'abaisser le cadre de support déplaçable (31), un fil à perles de diamant (33) utilisé pour couper et traiter un objet à scier, au moins une poulie mobile (34) utilisée pour s'approcher de l'objet à scier et guider le fil à perles de diamant (33) pour couper et traiter l'objet à scier ; et
un composant de rétraction de fil (40), le composant de rétraction de fil (40) comprenant au moins une poulie de rétraction de fil (41), et une crémaillère de rétraction de fil (42) utilisée pour monter ladite au moins une poulie de rétraction de fil (41), la crémaillère de rétraction de fil (42) étant montée sur la base d'installation (10), ladite au moins une poulie de rétraction de fil (41) étant montée en rotation sur la crémaillère de rétraction de fil (42), et ladite au moins une poulie de rétraction de fil (41) étant enroulée par le fil à perles de diamant (33) sorti depuis ladite au moins une poulie mobile (34) ;
dans laquelle le composant déplaçable de libération de charge de coupe (30) comprend en outre un mécanisme de libération de charge (35) utilisé pour exécuter une opération de libération de charge sur une charge anormalement excessive agissant sur le fil à perles de diamant (33) du fait d'une pluralité de raisons anormales ;
le cadre de support déplaçable (31) comprend un bras rotatif (310) et un premier bras de support (311), le bras rotatif (310) comprend une première extrémité (3101) et une seconde extrémité (3102) agencée à l'opposé de la première extrémité (3101), la première extrémité (3101) du bras rotatif (310) est montée en rotation sur le premier bras de support (311), et entre le bras rotatif (310) et le premier bras de support (311) se trouvent agencées une région initiale qui permet au bras rotatif (310) d'être stationnaire par rapport au premier bras de support (311), et une région de rotation qui permet au bras rotatif (310) d'être mis en rotation par rapport au premier bras de support (311) ; le mécanisme d'élévation (32) est monté sur la base d'installation (10), et est connecté au cadre de support déplaçable (31) ; une poulie parmi ladite au moins une poulie mobile (34) est montée en rotation sur la seconde extrémité (3102) du bras rotatif (310) ; le fil à perles de diamant (33) est enroulé sur ladite au moins une poulie d'entraînement (21) et ladite au moins une poulie mobile (34) respectivement ; le mécanisme de libération de charge (35) comprend un composant de récupération de libération de charge (351) utilisé pour libérer la charge anormalement excessive agissant sur la poulie mobile (34) montée sur le bras rotatif (310) et transmise depuis le fil à perles de diamant (33), tout en entraînant le bras rotatif (310) pour le renvoyer à la région initiale depuis la région de rotation, une extrémité du composant de récupération de libération de charge (351) est connectée au cadre de support déplaçable (31), une autre extrémité du composant de récupération de libération de charge (351) est connectée au bras rotatif (310).

2. Machine à scier à fil selon la revendication 1, dans laquelle le composant de récupération de libération de charge (351) est un ressort de traction (351a).

3. Machine à scier à fil selon la revendication 2, dans laquelle une extrémité du ressort de traction (351a) est connectée au premier bras de support (311), tandis qu'une autre extrémité du ressort de traction (351a) est connectée au bras rotatif (310), et est proche de la poulie mobile (34) agencée sur le bras rotatif (310), tandis qu'une ligne centrale du ressort de traction (351a) chevauche une ligne centrale du bras rotatif (310) quand le bras rotatif (310) est situé dans la région initiale.

4. Machine à scier à fil selon la revendication 2, dans laquelle le cadre de support déplaçable (31) comprend en outre un deuxième bras de support (312a), le deuxième bras de support (312a) étant agencé sur le dessus du premier bras de support (311) ;
une extrémité du ressort de traction (351a) est connectée au deuxième bras de support (312a), et une autre extrémité du ressort de traction (351a) est connectée au bras rotatif (310), et est proche de la poulie mobile (34) agencée sur le bras rotatif (310), tandis que la ligne centrale du ressort de traction (351a) a un angle θ en éloignement de la ligne centrale du bras rotatif (310) quand le bras rotatif (310) est situé dans la région initiale, et 0° < θ < 90°.

5. Machine à scier à fil selon la revendication 2, dans laquelle le cadre de support déplaçable (31) comprend en outre le deuxième bras de support (312b) et un troisième bras de support (313b), le troisième bras de support (313b) est situé au-dessus et agencé à l'opposé du bras rotatif (310), et le troisième bras de support (313b) est agencé en parallèle au bras rotatif (310) quand le bras rotatif (310) est situé dans la région initiale, une extrémité du deuxième bras de support (312b) est connectée au premier bras de support (311), tandis qu'une autre extrémité du deuxième bras de support (312b) est connectée au troisième bras de support (313b) ;
une extrémité du ressort de traction (351a) est connectée au troisième bras de support (313b), une autre extrémité du ressort de traction (351a) est connectée au bras rotatif (310), et est proche de la poulie mobile (34) agencée sur le bras rotatif (310), tandis que la ligne centrale du ressort de traction (351a) recoupe perpendiculairement la ligne centrale du bras rotatif (310) quand le bras rotatif (310) est situé dans la région initiale.

6. Machine à scier à fil selon la revendication 1, dans laquelle le composant de récupération de libération de charge (351) est un ressort de compression (351b).

7. Machine à scier à fil selon la revendication 6, dans laquelle le cadre de support déplaçable (31) comprend le deuxième bras de support (312c) et le troisième bas de support (313c), le troisième bras de support (313c) est situé en dessous et agencé à l'opposé du bras rotatif (310), et le troisième bras de support (313c) est agencé en parallèle au bras rotatif (310) quand le bras rotatif (310) est situé dans la région initiale, une extrémité du deuxième bras de support (312c) est connectée au premier bras de support (311), tandis qu'une autre extrémité du deuxième bras de support (312c) est connectée au troisième bras de support (313c) ;
une extrémité du ressort de compression (351b) est connectée au troisième bras de support (312c), une autre extrémité du ressort de compression (351b) est connectée au bras rotatif (310), et est proche de la poulie mobile (34) agencée sur le bras rotatif (310), tandis que la ligne centrale du ressort de compression (351b) recoupe perpendiculairement la ligne centrale du bras rotatif (310) quand le bras rotatif (310) est situé dans la région initiale.

8. Machine à scier à fil selon l'une quelconque des revendications 1 à 7, dans laquelle le dispositif déplaçable de libération de charge de coupe comprend en outre un mécanisme de fixation (37), utilisé pour fixer le bras rotatif (310), afin de fixer le bras rotatif (310) à une position quelconque entre la région initiale et la région de rotation.

9. Machine à scier à fil selon la revendication 8, dans laquelle le mécanisme de fixation (37) comprend une vis de blocage, une extrémité de la vis de blocage est connectée au bras rotatif (310), tandis qu'une autre extrémité de celle-ci est connectée au premier bras de support (311).

10. Machine à scier selon la revendication 8, dans laquelle le mécanisme de fixation (37) comprend un coussin amortisseur de vibrations (371), et un moyen de maintien (372) utilisé pour maintenir et positionner le coussin amortisseur de vibrations (371), le moyen de maintien (372) est connecté de manière fixe au cadre de support, et le moyen de maintien (372) a une rainure de logement (3721) agencée, utilisée pour loger le coussin amortisseur de vibrations (371), la rainure de logement (3721) logeant une partie de connexion entre le bras rotatif (310) et le premier bras de support (311) ;
le coussin amortisseur de vibrations (371) est agencé dans la rainure de logement (3721), et est en contact à la fois avec le bras rotatif (310) et le premier bras de support (311).

11. Machine à scier à fil selon la revendication 1, dans laquelle ladite au moins une poulie d'entraînement (21), ladite au moins une poulie mobile (34), ladite au moins une poulie de rétraction de fil (41) ne sont pas totalement agencées sur un même plan.

12. Machine à scier à fil selon la revendication 11, dans laquelle ladite au moins une poulie d'entraînement (21), ladite au moins une poulie de rétraction de fil (41) sont agencées sur un même plan, et le plan est défini comme étant un premier plan, au moins une des poulies mobiles (34) n'est pas agencée sur le premier plan, mais dans un plan formant un angle avec le premier plan.

13. Machine à scier à fil selon la revendication 12, dans laquelle la poulie d'entraînement (21) est agencée en deux parties, définie comme étant une première poulie d'entraînement (211) et une seconde poulie d'entraînement (212) respectivement, la première poulie d'entraînement (211) et la seconde poulie d'entraînement (212) étant empilées sur le premier plan ;
la poulie mobile (34) est agencée en trois parties, et est définie comme étant une première poulie mobile (341), et une deuxième poulie mobile (342) et une troisième poulie mobile (343) respectivement, la première poulie mobile (341), la deuxième poulie mobile (342) et la troisième poulie mobile (343) sont agencées de façon intermédiaire dans le cadre de support déplaçable (31) suivant une direction latérale du cadre de support déplaçable (31), et la deuxième poulie mobile (342) est située entre la première poulie mobile (341) et la troisième poulie mobile (343), la deuxième poulie mobile (342) n'est pas agencée sur le premier plan, mais forme un angle avec le premier plan ; une poulie parmi la première poulie mobile (341) et la troisième poulie mobile (343) n'est pas agencée sur le premier plan, mais forme un angle avec le premier plan, une autre poulie parmi la première poulie mobile (341) et la troisième poulie mobile (343) est agencée sur le premier plan ;
la poulie de rétraction de fil (41) est agencée en deux partie, et est définie comme étant une première poulie de rétractation de fil (411), une seconde poulie de rétraction de fil (412) respectivement, la première poulie de rétractation de fil (411) et la seconde poulie de rétraction de fil (412) sont agencées de façon intermédiaire sur la crémaillère de rétraction de fil (42), suivant une direction latérale de la crémaillère de rétraction de fil (42), et à la fois la première poulie de rétraction de fil (411) et la seconde poulie de rétraction de fil (412) sont agencées sur le premier plan.

14. Machine à scier à fil selon la revendication 13, dans laquelle la première poulie d'entraînement (211) et la seconde poulie d'entraînement (212) sont superposées et montées à une position intermédiaire de la base d'installation (10) ;
la première poulie mobile (341) et la troisième poulie mobile (343) sont agencées sur les deux côtés du cadre de support déplaçable (31) respectivement, la seconde poulie mobile (342) est agencée à une position intermédiaire du cadre de support déplaçable (31), et à l'opposé de la première poulie d'entraînement (211) et de la seconde poulie d'entraînement (212) superposées ;
la première poulie de rétractation de fil (411) et la seconde poulie de rétractation de fil (412) sont agencées sur les deux côtés de la crémaillère de rétractation de fil (42) respectivement.

15. Machine à scier à fil selon la revendication 14, dans laquelle la deuxième poulie mobile (342) est située au-dessus ou en dessous de la première poulie mobile (341) et de la troisième poulie mobile (343).

16. Machine à scier à fil selon la revendication 13, dans laquelle la première source d'entraînement (22) et un moteur, deux extrémités de sortie du moteur sont connectées à la première poulie d'entraînement (211) et à la seconde poulie d'entraînement (212) superposées respectivement.

17. Machine à scier à fil selon la revendication 1, dans laquelle le mécanisme d'élévation (32) comprend un rail de coulissement (321), agencé sur la base d'installation (10) et s'étendant vers le haut, un siège de coulissement (322) agencé de manière coulissante sur le rail de coulissement (321), une seconde source d'entraînement (323) agencée sur le siège de coulissement (322) et connectée au rail de coulissement (321) avant d'entraîner le siège de coulissement (322) et de l'amener à coulisser et à fonctionner, le cadre de support déplaçable (31) étant connecté au siège de coulissement (322).

18. Machine à scier à fil selon la revendication 17, dans laquelle la seconde source d'entraînement (323) est un moteur d'entraînement hydraulique, le rail de coulissement (321) a une région crantée agencée ; la région crantée s'étend le long d'une même direction que le rail de coulissement (321) s'étend le long d'une même direction que celle dans laquelle le rail de coulissement (321) s'étend ; une extrémité de sortie du moteur d'entraînement hydraulique est engagée avec la région crantée.

19. Machine à scier à fil selon la revendication 17, dans laquelle la première source d'entraînement (22) est située sur une extrémité latérale du rail de coulissement (321).

20. Machine à scier à fil selon la revendication 1, comprenant en outre un écran de protection (50) utilisé pour empêcher le fil à perles de diamant (33) endommagé de projeter des éclats et de blesser une personne, l'écran de protection (50) comprenant un écran de protection supérieur (50) utilisé pour empêcher le fil à perles de diamant (33) de projeter des éclats vers un côté supérieur du cadre de support déplaçable (31) après avoir été cassé, un premier écran de protection latéral (52) agencé de manière télescopique pour suivre le cadre de support déplaçable (31) dans son coulissement vers le haut et vers le bas, de manière à empêcher le fil à perles de diamant (33) de projeter des éclats vers un côté du cadre de support déplaçable (31) après avoir été cassé, et un second écran de protection latéral (53) agencé de manière télescopique pour suivre le cadre de support déplaçable (31) dans son coulissement vers le haut et vers le bas, de manière à empêcher le fil à perles de diamant (33) de projeter des éclats vers un autre côté du cadre de support déplaçable (31) après avoir été cassé ;
l'écran de protection supérieur (51) est agencé sur le cadre de support déplaçable (31), couvrant le côté supérieur du cadre de support déplaçable (31) ;
une extrémité supérieure du premier écran de protection latéral (52) est connectée à un côté du cadre de support mobile (31), une extrémité inférieure du premier écran de protection latéral (52) est connectée à un côté de la crémaillère de rétractation de fil (42) ;
une extrémité supérieure du second écran de protection latéral (53) est connectée à un autre côté du cadre de support déplaçable (31), une extrémité inférieure du second écran de protection latéral (53) est connectée à un autre côté de la crémaillère de rétractation de fil (42).

21. Machine à scier à fil selon la revendication 20, dans laquelle le premier écran de protection latéral (52) comprend un premier écran de fixation (521) et un premier écran mobile (522), une extrémité inférieure du premier écran de fixation (521) est connectée à un côté de la crémaillère de rétractation de fil (42), et une extrémité supérieure du premier écran mobile (522) est connectée à un côté du châssis de support déplaçable (31), une extrémité inférieure du premier écran mobile (522) est connectée de manière coulissante à une extrémité supérieure du premier écran de fixation (521) ;
le second écran de protection latéral (53) comprend un second écran de fixation (531) et un second écran mobile (532), une extrémité inférieure du second écran de fixation (531) est connectée à un autre côté de la crémaillère de rétractation de fil (42), et une extrémité supérieure du second écran mobile (532) est connectée à un autre côté du cadre de support déplaçable (31), une extrémité inférieure du second écran mobile (532) est connectée de manière coulissante à une extrémité supérieure du second écran de fixation (531).

22. Machine à scier à fil selon la revendication 20, dans laquelle une pluralité de premiers trous d'écoulement sortant (523) sont agencés dans le premier écran de protection latéral (52), utilisés pour évacuer un fluide généré pendant un processus de coupe par fil à perles de diamant (33), et la pluralité de premiers trous d'écoulement sortant (523) sont agencés selon un agencement ;
une pluralité de seconds trous d'écoulement sortant (533) sont agencés dans le second écran de protection latéral (53), utilisés pour évacués le fluide généré pendant un processus de coupe par fil à perles de diamant (33), et la pluralité de seconds trous d'écoulement sortant (533) sont agencés selon un agencement.
